# EUROPÄISCHE PATENTSCHRIFT

(11) **EP 3 795 762 B1**
(45) Veröffentlichungstag und Bekanntmachung des Hinweises auf die Patenterteilung: **17.09.2025**
(21) Anmeldenummer: 20196852.6
(22) Anmeldetag: 18.09.2020
(51) Int. Cl.: E03D 13/00

(54) **VERFAHREN ZUM BETREIBEN EINES URINALSYSTEMS, URINALSYSTEM UND WASSERVERBRAUCHERSYSTEM MIT EINEM URINALSYSTEM**
METHOD OF OPERATING A URINAL SYSTEM, URINAL SYSTEM AND WATER CONSUMPTION SYSTEM WITH A URINAL SYSTEM
PROCÉDÉ DE FONCTIONNEMENT D'UN SYSTÈME D'URINOIR, SYSTÈME D'URINOIR ET SYSTÈME DE CONSOMMATION D'EAU DOTÉ D'UN SYSTÈME D'URINOIR

(30) Priorität: 20.09.2019 DE 102019125370
(43) Veröffentlichungstag der Anmeldung: 24.03.2021
(73) Patentinhaber: micas AG, 09376 Oelsnitz/Erzgebirge (DE)
(72) Erfinder: Ebert, Mark, 09376 Oelsnitz/Erzgebirge (DE); Fritzsche, Michael, 09221 Neukirchen/Erzgebirge (DE); Cummings, Steve, East Mona Vale, New South Wales 2103 (AU)
(74) Vertreter: Steiniger, Carmen

(56) Entgegenhaltungen:
- EP-A2- 0 783 058
- US-A1- 2009 070 922

## Beschreibung

Die vorliegende Erfindung betrifft Verfahren zum Betreiben eines Urinalsystems mit einem Urinalbecken, einem Flüssigkeitszulauf mit einem Zulaufventil, einem Urinalablauf, wenigstens einem an dem Urinalbecken und/oder dem Urinalablauf vorgesehenen HF-Bewegungssensor und einer mit dem wenigstens einen HF-Bewegungssensor und dem Zulaufventil gekoppelten Urinalsteuerung, durch die das Zulaufventil für eine vorbestimmte Zeit geöffnet wird, wenn durch den wenigstens einen HF-Bewegungssensor ablaufende Flüssigkeit detektiert wird. Zudem betrifft die Erfindung ein Urinalsystem mit einem Urinalbecken, einem Flüssigkeitszulauf mit einem Zulaufventil, einem Urinalablauf, einem oder wenigstens einem an dem Urinalbecken und/oder dem Urinalablauf vorgesehenen HF-Bewegungssensor und einer mit dem wenigstens einen HF-Bewegungssensor und dem Zulaufventil gekoppelten Urinalsteuerung. Ferner betrifft die vorliegende Erfindung ein Wasserverbrauchersystem mit einem erfindungsgemäßen Urinalsystem.

Besonders in öffentlichen Einrichtungen, wie Theatern, Sportstätten, Restaurants, Schulen und Universitäten, aber auch in größeren Bürokomplexen und ähnlichen hoch frequentierten Gebäuden werden Urinale aufgrund der Vielzahl der Benutzer häufig mit automatischer und berührungsloser Spülung ausgestattet. Zum Erkennen einer Benutzung können unterschiedliche Sensorverfahren zum Einsatz kommen. Bei hoher Frequentierung kann es häufig zu Verstopfungen oder anderen Fehlfunktionen des Urinals kommen, welche oftmals erst sehr spät durch einen Benutzer oder durch regelmäßige Wartungen erkannt werden und welche bis zu deren Erkennung zu einem unnötig hohen Wasserverbrauch oder zu einer unzureichenden Reinigung des Urinals führen können.

Sehr verbreitet ist das Erkennen einer möglichen Benutzung eines Urinals durch einen Näherungssensor, der eine automatische Spülung bei Anwesenheit eines Benutzers auslöst. Ein derartiges System ist in der Druckschrift EP 0 597 286 A1 beschrieben. Nachteilig ist, dass vom verwendeten Sensor nicht registriert werden kann, ob die sich nähernde Person das Urinal auch tatsächlich benutzt hat. Erkennt die Person erst beim Stehen vor dem Urinal, dass dieses beispielsweise verstopft ist, so wird sie es nicht benutzen, eine Spülung würde dennoch ausgelöst werden, was eventuell sogar zum Überlauf des verstopften Urinalbeckens führen kann.

Eine weitere Möglichkeit zur Erkennung einer Urinalnutzung ist die Verwendung von kapazitiven Sensoren.

Die Druckschrift WO 2008/017314 A1 beschreibt ein Verfahren und eine Vorrichtung zur berührungslosen Auslösung einer Spülung in Urinalsystemen mit elektrisch ansteuerbarem Wasserventil unter Verwendung eines am Auffangbecken oder am Ablaufrohr des Urinals angebrachten, kapazitiven Sensors, welcher mit einer elektronischen zentralen Steuer- und Auswerteeinheit, wie einem Mikrocontroller, elektrisch verbunden ist. Wenn der Sensor aufgrund einer sich bei Einleitung einer Flüssigkeit unter Einfluss der damit veränderten dielektrischen Gegebenheiten sich ändernden Kapazität des Sensors die bestimmungsgemäße Nutzung des Urinals feststellt, gibt der Sensor ein Sensorsignal an die Steuer- und Auswerteeinheit ab, woraufhin mittels dieser Steuer- und Auswerteeinheit das Ventil geöffnet und dann eine Spülung ausgelöst wird. Nach jedem Spülvorgang des Urinals wird entweder der Sensorwert des Sensorsignals oder die Schaltschwelle nach einer wählbaren Zeit neu kalibriert und somit an die nach dem Spülvorgang herrschenden geänderten Bedingungen des Urinals angepasst.

Die Druckschrift DE 102 61 283 A1 offenbart ein Urinal, bei dem eine berührungslose und automatische Spülung ausgelöst wird, nachdem eine auf einer Außenseite und oberhalb eines Auslaufes eines Urinals befindliche Struktur, welche einen elektrischen Kondensator bildet, eine Nutzung des Urinals über eine Kapazitätsveränderung des Kondensators registriert. Fehlfunktionen des Urinals, wie Verstopfungen des Urinalablaufes oder Fehlfunktionen des Zulaufventils können durch die beschriebene Struktur nicht registriert werden, da eine Auswertung lediglich über die Bildung eines Mittelwertes aus einer Vielzahl von Messwerten des einen Kondensators erfolgt.

Die Druckschrift EP 1 586 713 A1 beinhaltet eine Vorrichtung und ein Verfahren zur selbstständigen Spülauslösung einer Spülvorrichtung mittels eines kapazitiven Sensors, wobei die Vorrichtung einen Siphon aufweist, der einen Einlass, einen Auslass und eine Überlaufkante besitzt. An einer Außenseite des Siphons ist ein kapazitiver Sensor mit wenigstens einer Elektrode angeordnet. Die wenigstens eine Elektrode ist in Strömungsrichtung gesehen vor der Überlaufkante im Bereich der Oberfläche des Sperrwasser angeordnet.

Aus der Druckschrift EP 2 649 246 B1 ist ein Sanitärsystem mit einer Mischzentrale bekannt, welche eingangsseitig an eine Warmwasserleitung sowie eine Kaltwasserleitung und ausgangsseitig an mehrere zu Verbrauchern geführte Mischleitungen angeschlossen ist. Das Sanitärsystem nutzt eine Steuerzentrale, die aufgrund von Parameterwerten, wie Temperatur, Druck, Durchflussgeschwindigkeit und/oder Durchflussmenge, eine steuerbare Mischeinheit steuert. Für die Ermittlung der Parameterwerte sind entsprechende Sensoren vorgesehen.

Die Druckschrift WO 2009/061857 A2 schlägt ein Verfahren zum automatischen Erzeugen von Arbeitsaufträgen für eine Toilette vor, wobei nicht nur Zustände einer Vielzahl von Vorrichtungssensoren, sondern auch Zustände eines Nichtvorrichtungssensors erfasst werden und diese Zustände genutzt werden, um den Zustand einer Vorrichtung zu bestimmen, welche keinen Sensor aufweist. Insbesondere wird der Bedarf an Auffüllung von Verbrauchsmaterialien kalkuliert.

In der Druckschrift US 2011/0114202 A1 wird ein Ventil in einer Wasserversorgungsleitung bei einer durch einen in der Wasserversorgungsleitung befindlichen Sensor erfassten ungewöhnlichen Wasserflussrate mittels eines Controllers geschlossen und nach einer Warte-Periode wieder geöffnet.

In der Druckschrift EP 0 783 058 A2, die als ein nächstliegender Stand der Technik angesehen wird, ist eine Steuereinrichtung für ein Urinal offenbart.

Die Steuereinrichtung weist eine Sensoreinheit auf, die in einem unteren Bereich einer Rückwand des Urinals angebracht ist und mit einem am Wassereinlass vorgesehenen Spülventil 28 und einem am Ablaufrohr angebrachten Abflussventil verbunden ist. Mittels des Bewegungssensors wird neben der Anwesenheit/Bewegung eines Benutzers eine abgegebene Urinmenge erfasst. Auf Basis der erfassten Daten wird das Spülventil angesteuert und damit ein Spülvorgang in Gang gesetzt. Ferner dient der Bewegungssensor einer Füllstandsüberwachung. Dabei offenbart die EP -058 eine mit dem wenigstens einen HF-Bewegungssensor und dem Zulaufventil gekoppelte Urinalsteuerung, durch die das Zulaufventil für eine vorbestimmte Zeit geöffnet wird, wenn durch den wenigstens einen HF-Bewegungssensor ablaufende Flüssigkeit detektiert wird. Die Urinalsteuerung weist ein Datenverarbeitungssystem auf, das wenigstens von dem wenigstens einen HF-Bewegungssensor erfasste Daten abfragt und empfängt, rechentechnisch auswertet und auf Basis der ausgewerteten Daten erkennt, dass der Urinalablauf verstopft ist**.**

Die Druckschrift US 2009/0070922 A1 beschreibt ein Urinal, welches einen Hochfrequenzsensor aufweist. Mittels des Hochfrequenzsensors kann eine Anwesenheit eines Nutzers oder ein Urinfluss detektiert werden. Der Hochfrequenzsensor ist mit einem Spülventil verbunden, welches eine Spülwasserzuführung in Abhängigkeit des erfassten Signals verändert oder stoppt.

Oftmals ist das unmittelbare Erkennen einer Fehlfunktion eines Urinals und/oder das korrekte Zuordnen einer Fehlfunktion eines Urinals zu einer bestimmten Ursache problematisch. So passiert beispielsweise das bei einem Urinalspülvorgang vom Flüssigkeitszulauf über die Urinalkeramik zum Urinalablauf fließende Wasser den Urinalablauf mit einer gewissen Verzögerung. Eine solche Verzögerung kann in einigen Urinalsystemen beispielsweise bedingt durch eine hydraulische Verzögerung des Zulaufventils, den zurück zu legenden Weg durch Schläuche/Rohre zwischen Zulaufventil und Flüssigkeitszulauf oder durch Reservoir-Vorrichtungen bedingt sein. Zu verzögerten Abläufen kann jedoch auch ein defektes Zulaufventil oder ein zumindest teilweise verstopfter Urinalablauf führen. Die konkrete Problemursache kann bei bekannten Urinalsystemen trotz verwendeter Sensorik meist erst durch einen Sanitärtechniker oder Servicemitarbeiter erfasst werden.

Es ist daher die Aufgabe der vorliegenden Erfindung, die Funktionalität des eingangs erwähnten Urinalsystems, des eingangs angegebenen Wasserverbrauchersystems und der oben erwähnten Verfahren heraufzusetzen.

Die Aufgabe wird durch ein Verfahren gemäss Anspruch 1 gelöst.

In einer vorteilhaften Ausführungsform der Erfindung erkennt das Datenverarbeitungssystem auf Basis der ausgewerteten Daten eine vordefinierte Urinalnutzungssituation und/oder -frequentierung und passt darauf basierend bei wenigstens einem nachfolgenden Urinalspülvorgang eine Öffnungszeit und/oder Öffnungsstellung und/oder eine Öffnungshäufigkeit des Zulaufventils daran an.

Das mit dem Verfahren betriebene Urinalsystem kann dabei ein Urinalbecken oder eine Mehrzahl von Urinalbecken aufweisen.

Das Zulaufventil des mit dem Verfahren betriebenen Urinalsystems ist vorzugsweise ein Magnetventil mit einer definierten Öffnungszeit und/oder Öffnungsstellung und/oder Öffnungshäufigkeit, welches von der Urinalsteuerung des mit dem Verfahren betriebenen Urinalsystems angesteuert wird.

Wie bereits vorstehend erläutert, ist der wenigstens eine HF-Bewegungssensor bevorzugt derart an dem Urinalbecken und/oder dem Urinalablauf angeordnet, dass er in der Lage ist, die Bewegung des bei einem Urinalspülvorgang vom Flüssigkeitszulauf zum Urinalablauf fließenden Spülwassers und/oder des bei Benutzung des Urinalsystems auf das Urinalbecken auftreffenden Urins zu erkennen.

Bevorzugt ist der wenigstens eine HF-Bewegungssensor direkt oder mittels einer Haltevorrichtung an der Rückseite des Urinalbeckens befestigt, insbesondere an die Rückseite des Urinalbeckens geklebt. Der wenigstens eine HF-Bewegungssensor ist dabei bevorzugt derart ausgerichtet, dass er nicht in Richtung einer im Geruchsverschluss des Urinalablaufs befindlichen stehenden Sperrflüssigkeit weist. Durch die Anordnung des wenigstens einen HF-Bewegungssensors in unmittelbarer Nähe zum Urinalablauf kann der wenigstens eine HF-Bewegungssensor vorteilhafterweise ablaufende Flüssigkeit detektieren.

Vorzugsweise über ein drahtloses oder vermaschtes Datenübertragungsnetzwerk, wie Bluetooth oder Bluetooth mesh, werden die von dem wenigstens einen HF-Bewegungssensor erfassten Daten vom Datenverarbeitungssystem abgefragt und/oder empfangen. Vorteilhafterweise ermöglicht dies die Kommunikation mit einem Mobilgerät, mit einer Gebäudesteuerung über eine Cloud oder ein Gebäudemanagementsystem und mit anderen Sensorprodukten entweder direkt im Netzwerk oder indirekt über Gateways. Damit einher geht der Vorteil einer erleichterten Bedienfunktion, sowie einfachen Einstellungs- und Diagnosemöglichkeiten und die Vereinfachung des Abfragens von Betriebsdaten oder des Anzeigens von Servicebedarf.

Das Datenverarbeitungssystem registriert Abweichungen von vorgegebenen Richtwerten oder von Erfahrungswerten bzw. eigenen Betriebsdaten, beispielsweise bezüglich der üblichen mit einem Urinalspülvorgang verbundenen Abflusszeiten oder der Menge der während eines Spülvorgangs abfließenden Flüssigkeit. Bei Abweichungen kann das Datenverarbeitungssystem wenigstens eine Aktion zur Vermeidung der Ursache der jeweiligen Abweichung auslösen. Zusätzlich zu den eigenen Betriebsdaten eines einzelnen HF-Bewegungssensors können vom Datenverarbeitungssystem Daten von anderen Sensoren oder aus einer Gebäudesteuerung genutzt werden. Beispielsweise können Pausenzeiten in einer öffentlichen Einrichtung wie einem Theater oder einer Sportstätte oder die Öffnungszeiten eines Gebäudes berücksichtigt werden.

Eine mögliche von der Datenverarbeitungsanlage auszulösende Aktion zur Vermeidung eines Fehlers des Urinalsystems ist insbesondere die Anpassung der Öffnungszeit und/oder der Öffnungsstellung und/oder der Öffnungshäufigkeit des Zulaufventils und/oder das Absetzen einer Fehlermeldung und/oder einer Servicemeldung.

Bezüglich der Erkennung von Abweichungen der Sensorsignale bei einer vollständigen oder teilweisen Verstopfung, einer Druckschwankung in einem mit dem Urinal verbundenen Abwassersystem, eines Defektes des Flüssigkeitszulaufes, eines Ausfalls wenigstens eines des wenigstens einen HF-Bewegungssensors sowie der vom Datenverarbeitungssystem im jeweiligen Fall auszulösenden Aktionen wird auf die vorangegangenen Ausführungen in vollem Umfang verwiesen.

Vorteilhafterweise können durch die rechentechnische Auswertung der Daten des wenigstens einen Drucksensors und/oder des wenigstens einen Durchflusssensors in Bezug auf die Daten von wenigstens einem des wenigstens einen HF-Bewegungssensors verschiedene Fehler unterschieden werden, die zu gleichen oder ähnlichen Reaktionen von wenigstens einem des wenigstens einen HF-Bewegungssensors führen.

Eine ausbleibende Reaktion wenigstens eines des wenigstens einen HF-Bewegungssensors auf eine zuvor ausgelöste Spülung kann beispielsweise darauf zurückzuführen sein, dass eine vollständige Verstopfung vorliegt, aufgrund derer wenigstens einer des wenigstens einen HF-Bewegungssensors blind ist, dass das Zulaufventil aufgrund eines Ventildefektes oder eines Elektronikdefektes nicht öffnet oder dass Fehler in der Wasserversorgung vorliegen. Meldet wenigstens ein Drucksensor gleichzeitig einen vorhandenen optimalen Flüssigkeitsdruck, so kann ein Fehler in der Wasserversorgung ausgeschlossen werden. Bei einer gleichzeitigen Meldung des wenigstens einen Durchflusssensors, dass ein Flüssigkeitszulauf erfolgt, wird das Datenverarbeitungssystem als wahrscheinlichstes Szenario eine Verstopfung des Urinalablaufes annehmen und kann entsprechende Aktionen, wie bereits weiter oben beschrieben, auslösen.

Die Auswertung der Sensordaten durch das Datenverarbeitungssystem erfolgt dabei bevorzugt mittels eines Klassifikators oder eines anderen geeigneten KI-Algorithmus' durch den Abgleich typischer Signalverläufe wenigstens eines des wenigstens einen HF-Bewegungssensors im Zusammenhang mit Daten des wenigstens einen Drucksensors und/oder des wenigstens einen Durchflusssensors in dem Flüssigkeitszulauf.

Eine Unterschreitung eines Druckmindestwertes oder eine Überschreitung eines Druckmaximalwertes in dem Flüssigkeitszulauf wird vorteilhafterweise durch Auswertung der Daten des wenigstens einen Drucksensors vom Datenverarbeitungssystem unmittelbar erkannt. Das Datenverarbeitungssystem kann daraufhin entsprechende Aktionen, wie das Verhindern eines weiteren Spülvorganges und/oder das Absetzen einer Fehler- und/oder Servicemeldung, auslösen.

Bezüglich der Erkennung von Abweichungen der Sensorsignale von wenigstens einem des wenigstens einen HF-Bewegungssensors bei einer vollständigen oder teilweisen Verstopfung, einer Druckschwankung in einem mit dem Urinal verbundenen Abwassersystem, eines Defektes des Flüssigkeitszulaufes, eines Ausfalls wenigstens eines des wenigstens einen HF-Bewegungssensors, sowie der vom Datenverarbeitungssystem im jeweiligen Fall auszulösenden Aktionen wird auf die vorangegangenen Ausführungen in vollem Umfang verwiesen.

Auch die Erkennung einer vordefinierten Urinalnutzungssituation und/oder -frequentierung und Reaktion auf diese kann wie vorstehend beschrieben erfolgen.

Vorteilhafterweise können durch die rechentechnische Auswertung der Daten des wenigstens einen Drucksensors und/oder des wenigstens einen Durchflusssensors in Bezug auf die Daten von wenigstens einem des wenigstens einen HF-Bewegungssensors verschiedene Fehler unterschieden werden, die zu gleichen oder ähnlichen Reaktionen von wenigstens einem des wenigstens einen HF-Bewegungssensors führen. Diesbezüglich wird vollumfänglich auf die vorangegangenen Ausführungen verwiesen.

Bevorzugt erkennt das Datenverarbeitungssystem, dass der Urinalablauf verstopft ist und/oder der Flüssigkeitszulauf defekt ist, wenn trotz geöffnetem Zulaufventil durch den wenigstens einen HF-Bewegungssensor keine ablaufende Flüssigkeit detektiert wird und/oder mit Hilfe des wenigstens einen HF-Bewegungssensors detektiert wird, dass zumindest ein unterer Bereich innerhalb des Urinalbeckens mit stehender Flüssigkeit gefüllt ist.

Vorteilhafterweise kann von dem Datenverarbeitungssystem eine unmittelbare Aktion zur Verhinderung eines Überlaufes des Urinalbeckens ausgelöst werden. Eine solche Aktion kann das Verhindern eines weiteren Spülvorganges und/oder das Absetzen einer Fehler- und/oder Servicemeldung sein.

Insbesondere erkennt das Datenverarbeitungssystem, ob der Urinalablauf verstopft ist oder der Flüssigkeitszulauf defekt ist, wenn trotz geöffnetem Zulaufventil und durch den wenigstens einen Drucksensor erfasstem Flüssigkeitsdruck und/oder durch den wenigstens einen Durchflusssensor erfasstem Flüssigkeitsdurchfluss durch den wenigstens einen HF-Bewegungssensor keine ablaufende Flüssigkeit detektiert wird und/oder mit Hilfe des wenigstens einen HF-Bewegungssensors detektiert wird, dass zumindest ein unterer Bereich innerhalb des Urinalbeckens mit stehender Flüssigkeit gefüllt ist.

Bezüglich der Erkennung von Abweichungen der Sensorsignale von wenigstens einem des wenigstens einen HF-Bewegungssensors bei einer vollständigen Verstopfung wird auf die vorangegangenen Ausführungen in vollem Umfang verwiesen.

Die Kombination der Daten des wenigstens einen Drucksensors mit denen des wenigstens einen Durchflusssensors und denen des wenigstens einen HF-Bewegungssensors erlaubt dabei vorteilhafterweise eine genauere Eingrenzung eines möglichen Fehlers.

Wie bereits weiter oben beschrieben, kann eine ausbleibende Reaktion wenigstens eines des wenigstens einen HF-Bewegungssensors auf eine zuvor ausgelöste Spülung beispielsweise darauf zurückzuführen sein, dass eine vollständige Verstopfung vorliegt, aufgrund derer wenigstens einer des wenigstens einen HF-Bewegungssensors blind ist, dass das Zulaufventil aufgrund eines Ventildefektes oder eines Elektronikdefektes nicht öffnet oder dass Fehler in der Wasserversorgung vorliegen. Meldet wenigstens ein Drucksensor gleichzeitig einen vorhandenen optimalen Flüssigkeitsdruck, so kann ein Fehler in der Wasserversorgung ausgeschlossen werden. Bei einer gleichzeitigen Meldung des wenigstens einen Durchflusssensors, dass ein Flüssigkeitszulauf erfolgt, wird das Datenverarbeitungssystem als wahrscheinlichstes Szenario eine Verstopfung des Urinalablaufs annehmen und kann entsprechende Aktionen, wie bereits weiter oben beschrieben, auslösen.

Bevorzugt erkennt das Datenverarbeitungssystem, dass der Urinalablauf teilweise verstopft ist und/oder der Flüssigkeitszulauf defekt ist, wenn trotz geöffnetem Zulaufventil durch den wenigstens einen HF-Bewegungssensor detektiert wird, dass Flüssigkeit aus dem Urinalbecken zeitverzögert abläuft.

Bezüglich der Erkennung von Abweichungen der Sensorsignale von wenigstens einem des wenigstens einen HF-Bewegungssensors bei einer teilweisen Verstopfung, sowie der Kombination der Daten von wenigstens einem des wenigstens einen HF-Bewegungssensors mit den Daten des wenigstens einen Durchlaufsensors wird auf die vorangegangenen Ausführungen in vollem Umfang verwiesen.

In einer weiteren bevorzugten Ausführungsform erkennt das Datenverarbeitungssystem, ob der Urinalablauf teilweise verstopft ist oder der Flüssigkeitszulauf defekt ist, wenn trotz geöffnetem Zulaufventil und durch den wenigstens einen Drucksensor erfasstem Flüssigkeitsdruck und/oder durch den wenigstens einen Durchflusssensor erfasstem Flüssigkeitsdurchfluss durch den wenigstens einen HF-Bewegungssensor detektiert wird, dass Flüssigkeit aus dem Urinalbecken zeitverzögert abläuft.

Bezüglich der Erkennung von Abweichungen der Sensorsignale von wenigstens einem des wenigstens einen HF-Bewegungssensors bei einer teilweisen Verstopfung, sowie der Kombination der Daten von wenigstens einem des wenigstens einen HF-Bewegungssensors mit den Daten des wenigstens einen Durchlaufsensors und/oder den Daten des wenigstens einen Drucksensors wird auf die vorangegangenen Ausführungen in vollem Umfang verwiesen.

In dem erfindungsgemäßen Verfahren wird vorzugsweise im gesamten Druck- und/oder Durchflussbereich durch die Urinalsteuerung die jeweilige Öffnungszeit des Zulaufventils an den jeweiligen Flüssigkeitsdruck und/oder den jeweiligen Flüssigkeitsdurchfluss in dem Flüssigkeitszulauf angepasst, also die jeweilige Spülmenge geregelt.

In vorteilhaften Ausführungsformen des erfindungsgemäßen Verfahrens wird dann, wenn erkannt wird, dass eine Unterschreitung eines Druckmindestwertes oder eine Überschreitung eines Druckmaximalwertes in dem Flüssigkeitszulauf vorliegt, zusätzlich zu der Anpassung der Öffnungszeit des Zulaufventils an den Flüssigkeitsdruck und/oder den Flüssigkeitsdurchfluss in dem Flüssigkeitszulauf eine Fehler- oder Servicemeldung durch das Datenverarbeitungssystem und/oder durch die Urinalsteuerung ausgegeben. Der erlaubte Druckbereich liegt bei der vorliegenden Erfindung beispielsweise bei 2 bis 8 bar.

Bei der vorliegenden Erfindung findet vorzugsweise kontinuierlich eine Anpassung der jeweiligen Öffnungszeit des Zulaufventils bei einer Spülung an ermittelte Druck- und/oder Durchflusswerte statt. So wird bei geringeren Druck- und/oder Durchflusswerten das Zulaufventil für eine längere Zeit geöffnet, um einen ausreichenden Wasserzufluss und somit eine ausreichende Reinigung des Urinalbeckens zu gewährleisten. Bei einer höheren Druck- und/oder Durchflusswerten wird das Zulaufventil für eine kürzere Zeit geöffnet, um einen unnötigen zu hohen Wasserverbrauch zu vermeiden.

Bei Unterschreitung eines Druckmindestwertes, wie beispielsweise unterhalb von z. B. 2 bar, und/oder bei Überschreitung eines Druckmaximalwertes, wie beispielsweise oberhalb von z. B. 8 bar, wird durch das Datenverarbeitungssystem und/oder die Urinalsteuerung vorzugsweise eine Service- oder Fehlermeldung ausgegeben.

Bevorzugt erkennt das Datenverarbeitungssystem, dass der Flüssigkeitszulauf defekt ist, wenn der wenigstens eine HF-Bewegungssensor keinen Flüssigkeitsfluss und/oder einen permanenten Flüssigkeitsfluss und/oder einen unter einem Flüssigkeitsflussschwellenwert liegenden Flüssigkeitsfluss detektiert.

Bei einem Defekt des Flüssigkeitszulaufes kann es entweder dazu kommen, dass der HF-Bewegungssensor keine Bewegung mehr registriert, da das Ventil nicht öffnet und keine Flüssigkeit fließt, dass der HF-Bewegungssensor permanent Bewegung registriert, da das Ventil nicht vollständig schließt, oder, dass der HF-Bewegungssensor eine verringerte Flüssigkeitsmenge registriert, da das Ventil nur unvollständig öffnet und beim Spülvorgang nur eine verringerte Wassermenge freigesetzt wird.

Falls der HF-Bewegungssensor einen permanenten Flüssigkeitsstrom registriert, kann durch das Ansteuern eines Sperrventils, bevorzugt über ein drahtloses oder vermaschtes Datenübertragungsnetzwerk, wie Bluetooth oder Bluetooth mesh, die Wasserversorgung des erfindungsgemäßen Urinalsystems unterbrochen werden, um einen unnötig hohen Wasserverbrauch oder einen Flüssigkeitsüberlauf zu vermeiden.

Detektiert der wenigstens eine HF-Bewegungssensor über einen längeren Zeitraum keinen Flüssigkeitsfluss, so kann mittels des Datenverarbeitungssystems geprüft werden, ob ein Ausfall des wenigstens einen HF-Bewegungssensors vorliegt. Vorteilhafterweise steuert die Urinalsteuerung den wenigstens einen HF-Bewegungssensor permanent oder in einem gewissen vorbestimmten Zeitabstand mit Impulsen an. Bei einem Ausfall des wenigstens einen HF-Bewegungssensors wird die fehlende Reaktion auf die Impulse erkannt und eine Fehler- und oder einer Servicemeldung abgesetzt.

In einer bevorzugten Ausführungsform des erfindungsgemäßen Verfahrens weist das Urinalsystem eine mit dem Datenverarbeitungssystem gekoppelte Fehler- und/oder Servicemeldungsausgabeeinheit auf und gibt das Datenverarbeitungssystem dann, wenn es wenigstens einen der Fehler erkennt, eine Servicemeldung an die Fehler- und/oder Servicemeldungsausgabeeinheit aus.

Vorteilhafterweise wird dadurch der Zeitraum bis zum Erkennen des Fehlers durch einen Nutzer und/oder einen Servicemitarbeiter deutlich verkürzt. Eine Fehler- und/oder Servicemeldung kann beispielsweise direkt an ein Smartphone oder ein anderes mobiles Endgerät oder eine Gebäudesteuerung erfolgen.

Bevorzugt erkennt das Datenverarbeitungssystem, dass eine Druckschwankung in dem mit dem Urinalbecken verbundenen Abwassersystem vorliegt, wenn sich aus einem Verlauf der Daten des wenigstens einen HF-Bewegungssensors eine Reihe von nacheinander erfolgten Urinalfehlspülvorgängen an dem Urinalsystem ergibt und/oder ein Signalmuster der Daten des wenigstens einen HF-Bewegungssensors einer charakteristischen Schwankung des Flüssigkeitsspiegels in dem Urinalablauf entspricht.

Wie bereits weiter oben erläutert, kommt es bei einer Druckschwankung in einem mit dem Urinalsystem verbundenen Abwassersystem, beispielsweise durch eine nicht fachgerechte Installation, wie eine unzureichende Entlüftung der Abwasserleitung, bei einem Spülvorgang zu starken Druckschwankungen, die zu schwankendem Wasserstand im Siphon bis hin zum Leersaugen führen können. Wird eine solche Schwankung durch den HF-Bewegungssensor als Bewegung erkannt, können Fehlspülungen ausgelöst werden. Bevorzugt erkennt das Datenverarbeitungssystem eine durch schwankenden Wasserstand ausgelöste Bewegung als solche.

Insbesondere dann, wenn das Datenverarbeitungssystem erkennt, dass eine Druckschwankung in einem mit dem Urinalsystem verbundenen Abwassersystem vorliegt, ändert die Urinalsteuerung eine Empfindlichkeit des wenigstens einen HF-Bewegungssensors und/oder löst dann, wenn ein Signalmuster der Daten des wenigstens einen HF-Bewegungssensors einer charakteristischen Schwankung des Flüssigkeitsspiegels in dem Urinalablauf entspricht, keinen Urinalspülvorgang aus.

Durch eine Änderung der Empfindlichkeit des wenigstens einen HF-Bewegungssensors wird in einer Ausbildung des erfindungsgemäßen Verfahrens ein schwankender Wasserstand, ausgelöst durch Druckschwankungen, nicht als reguläre Benutzung erkannt. Vorteilhafterweise werden dadurch Fehlspülungen und ein damit einhergehender unnötiger erhöhter Wasserverbrauch vermieden.

Auch das Verhindern weiterer Urinalspülvorgänge bei Erkennung einer charakteristischen Schwankung des Flüssigkeitsspiegels in dem Urinalablauf sorgt für eine Vermeidung eines unnötig erhöhten Wasserverbrauches.

Bevorzugt weist das Datenverarbeitungssystem wenigstens einen Datenverarbeitungsblock auf, der maschinell lernt und/oder auf Basis eines künstlichen neuronalen Netzes arbeitet und/oder ein Expertensystem ist.

Vorteilhafterweise ist das Datenverarbeitungssystem dadurch in der Lage, auf Basis eigener Betriebsdaten und zusätzlicher Daten von anderen Sensoren oder aus einer Gebäudesteuerung intelligente Entscheidungen zu treffen. Auf diese Weise können beispielsweise Wasserverbrauch und/oder Komfort für den oder die Nutzer optimiert und/oder das Maß an menschlichem Eingriff reduziert werden.

In einer bevorzugten Ausführungsform des erfindungsgemäßen Verfahrens ist das Urinalsystem in ein Wasserverbrauchersystem integriert, das zusätzlich zu dem Urinalsystem wenigstens einen weiteren Wasserverbraucher aufweist, an dem wenigstens ein weiterer Sensor vorgesehen ist, wobei das Datenverarbeitungssystem mit dem wenigstens einen weiteren Sensor gekoppelt ist und die von dem wenigstens einen weiteren Sensor empfangenen Daten ebenfalls rechentechnisch auswertet, wobei wenigstens ein(e) dabei ermittelte Spülzeit und/oder Verstopfung in einem Ablauf und/oder Druckschwankung in einem Abwassersystem und/oder Defekt einer Zulaufvorrichtung des wenigstens einen weiteren Wasserverbrauchers in die Erkennung wenigstens eines der Fehler eingebunden werden.

Der wenigstens eine weitere Wasserverbraucher ist dabei beispielsweise ein Waschbecken oder eine Toilette oder wenigstens ein weiteres Urinalsystem.

Der wenigstens eine weitere Sensor kann wenigstens ein Infrarotbewegungs oder - näherungssensor, wenigstens ein kapazitiver Bewegungssensor, wenigstens eine berührungslose Drückerplatte, wenigstens ein Temperatursensor und/oder wenigstens ein HF-Bewegungs- oder -näherungssensor sein.

Der wenigstens eine weitere Sensor kann auch unabhängig von dem Urinalsystem eingesetzt werden, um z. B. eine Verstopfung an dem wenigstens einen weiteren Wasserverbraucher, wie einem Waschtisch, einem weiteren Urinal oder einem WC, zu erkennen. In diesem Fall ist es zwar möglich, aber nicht erforderlich, dass mittels des wenigstens einen weiteren Sensors der jeweilige weitere Wasserverbraucher gesteuert wird.

Beispielsweise kann der wenigstens eine weitere Sensor in Relation zu dem weiteren Wasserverbraucher, an dem er vorgesehen ist, lediglich ein eine Verstopfung des jeweiligen Wasserverbrauchers erkennender Verstopfungssensor sein. Eine solche Verstopfung kann jedoch von dem wenigstens einen weiteren Sensor an die Urinalsteuerung und/oder an wenigstens eine weitere Steuerung eines der anderen Wasserverbraucher gemeldet werden.

Mit Hilfe des wenigstens einen weiteren Sensors können auch Wechselwirkungen in dem Wasserverbrauchersystem erkannt werden, die in die Urinalsteuerung einfließen können. Beispielsweise kann eine Spülung an einem WC zu Druckschwankungen in dem Urinalablauf des Urinalsystems führen. Entsprechend kann eine Fehlauslösung einer Spülung an dem Urinalsystem vermieden werden. Dies gilt entsprechend für andere, unter zusätzlicher Verwendung von Daten des weiteren Sensors erkennbaren Nutzungssituationen.

Der wenigstens eine weitere Sensor kann am Ablauf des weiteren Wasserverbrauchers, aber auch an einer anderen Position angeordnet sein.

Die Daten, die von dem wenigstens einen weiteren Sensor an dem wenigstens einen weiteren Wasserverbraucher erfasst werden, können erfindungsgemäß an das Datenverarbeitungssystem und/oder die Urinalsteuerung übermittelt werden. Dadurch erfährt das Datenverarbeitungssystem und/oder die Urinalsteuerung, dass beispielsweise eine Toilette spült und es zu Druckschwankungen im Abfluss und/oder im Abwassersystem kommen kann.

Vorteilhafterweise werden durch die Kombination der Daten mehrerer Sensoren Funktionen ermöglicht, die mit einem herkömmlichen Sensor nicht oder nur durch menschliche Entscheidungen und menschlichen Eingriff möglich sind. Beispielsweise können typische Nutzungssituationen erkannt, Zeiten hoher Frequentierung identifiziert und für die jeweilige Situation geeignete und wirksame Wassersparprogramme aktiviert werden.

Die ermittelte Spülzeit des wenigstens einen weiteren Wasserverbrauchers kann genutzt werden, um einen Defekt im Zulauf des Urinalsystems zu identifizieren. Beispielsweise kann ein nur teilweise geöffnetes Zulaufventil in Abweichungen zu den Spülzeiten des wenigstens einen weiteren Wasserverbrauchers resultieren.

Eine Verstopfung im Ablauf des wenigstens einen weiteren Wasserverbrauchers oder ein Defekt einer Zulaufvorrichtung des wenigstens einen weiteren Wasserverbrauchers kann dazu führen, dass mehr Nutzer auf das funktionierende Urinalsystem zurückgreifen, was zu einer erhöhten Frequentierung führt. In diesem Fall könnten geeignete Wassersparprogramme aktiviert werden.

Bevorzugt kommunizieren die Wasserverbraucher und das Urinalsystem miteinander über ein vermaschtes und/oder ein drahtloses lokales Datenübertragungsnetzwerk miteinander.

Vorteilhafterweise ermöglicht dies die Kommunikation mit einem Mobilgerät, was den Vorteil einer erleichterten Bedienfunktion, sowie einfachen Einstellungs- und Diagnosemöglichkeiten mit sich bringt. Weiterhin vorteilhaft ist, dass eine Kommunikation mit einer Gebäudesteuerung über eine Cloud oder ein Gebäudemanagementsystem ermöglicht wird, was insbesondere das Abfragen von Betriebsdaten oder das Anzeigen von Servicebedarf vereinfacht. Weiterhin vorteilhaft an einer Datenübertragung mittels drahtlosem oder vermaschtem Datenübertragungsnetzwerk, wie Bluetooth oder Bluetooth mesh, ist die Ermöglichung der Kommunikation mit anderen Sensorprodukten entweder direkt im Netzwerk oder indirekt über Gateways.

Weiterhin bevorzugt liegt ein Ausfall wenigstens eines des wenigstens einen HF-Bewegungssensors vor, wenn das Datenverarbeitungssystem von wenigstens einem des wenigstens einen HF-Bewegungssensors keine Daten empfängt oder die von dem wenigstens einem des wenigstens einen HF-Bewegungssensors durch das Datenverarbeitungssystem empfangenen Daten nicht von dem Datenverarbeitungssystem verarbeitbar sind und/oder wenigstens einer des wenigstens einen HF-Bewegungssensors wenigstens ein Servicesignal ausgibt.

Vorzugsweise steuert die Urinalsteuerung den wenigstens einen HF-Bewegungssensor permanent oder in einem gewissen vorbestimmten Zeitabstand mit Impulsen an. Bei einem Ausfall wenigstens eines des wenigstens einen HF-Bewegungssensors wird die fehlende Reaktion auf die Impulse erkannt und eine Fehler- und oder einer Servicemeldung abgesetzt.

Vorteilhafterweise kann dadurch ein Ausfall wenigstens eines des wenigstens einen HF-Bewegungssensors von einer längeren Nichtbenutzung des Urinals unterschieden werden.

Die Aufgabe wird darüber hinaus durch ein Urinalsystem mit einem Urinalbecken, einem Flüssigkeitszulauf mit einem Zulaufventil, einem Urinalablauf, wenigstens einem an dem Urinalbecken und/oder dem Urinalablauf vorgesehenen HF-Bewegungssensor und einer mit dem wenigstens einen HF-Bewegungssensor und dem Zulaufventil gekoppelten Urinalsteuerung, durch die das Zulaufventil für eine vorbestimmte Zeit geöffnet wird, wenn durch den wenigstens einen HF-Bewegungssensor ablaufende Flüssigkeit detektiert wird, gelöst, wobei das Urinalsystem ferner wenigstens einen Drucksensor oder wenigstens einen Durchflusssensor in dem Flüssigkeitszulauf aufweist oder mit wenigstens einem Drucksensor oder wenigstens einem Durchflusssensor in dem Flüssigkeitszulauf über ein vermaschtes Datenübertragungsnetzwerk gekoppelt ist, und die Urinalsteuerung ein Datenverarbeitungssystem aufweist und/oder mit einem Datenverarbeitungssystem des Urinalsystems verbunden ist, das ausgebildet ist, um wenigstens von dem wenigstens einen HF-Bewegungssensor und dem wenigstens einen Drucksensor oder dem wenigstens einen Durchflusssensor erfasste Daten abzufragen und zu empfangen, rechentechnisch auszuwerten und auf Basis der ausgewerteten Daten zu erkennen, ob wenigstens einer der folgenden Fehler vorliegt, und das ausgebildet ist, um wenigstens eine Aktion auszulösen, um wenigstens einen der folgenden Fehler zu vermeiden:
- dass der Urinalablauf verstopft ist oder
- dass eine Druckschwnakung in einem mit dem Urinalsystem verbundenen Abwassersystem vorliegt oder
- dass eine Unterschreitung eines Druckmindestwertes oder ein Überschreitung eines Druckmaximalwertes in dem Flüssigkeitszulauf vorliegt oder
- dass der Flüssigkeitszulauf und/oder das Zulaufventil defekt ist oder
- dass ein Ausfall wenigstens eines des wenigstens einen HF-Bewegungssensors vorliegt.

Vorzugsweise ist das Datenverarbeitungssystem ausgebildet ist, um auf Basis der ausgewerteten Daten eine vordefinierte Urinalnutzungssituation und/oder -frequentierung zu erkennen und darauf basierend bei wenigstens einem nachfolgenden Urinalspülvorgang eine Öffnungszeit und/oder eine Öffnungsstellung und/oder eine Öffnungshäufigkeit des Zulaufventils daran anzupassen.

Die HF-Bewegungssensoren sind vorzugsweise derart an dem Urinalbecken und/oder dem Urinalablauf angeordnet, dass sie abfließende Flüssigkeiten im Bereich eines Abflusses des Urinalbeckens erkennen können. Bevorzugt sind die HF-Bewegungssensoren an der Rückseite des Urinalbeckens in unmittelbarer räumlicher Nähe zum Urinalablauf angeordnet. Insbesondere sind die HF-Bewegungssensoren selbst oder wenigstens eine die HF-Bewegungssensoren aufweisende Haltevorrichtung an der Rückseite des Urinalbeckens angeklebt, verschraubt oder anderweitig daran befestigt.

Die HF-Bewegungssensoren weisen dabei bevorzugt nicht in die Richtung einer in einem Geruchsverschluss des Urinalablaufs stehenden Sperrflüssigkeit. Vorteilhafterweise wird durch die Anordnung und Ausrichtung der HF-Bewegungssensoren gewährleistet, dass diese in der Lage sind, das bei einem Urinalspülvorgang vom Flüssigkeitszulauf zum Urinalablauf fließende Spülwasser und/oder den bei Benutzung des Urinalsystems auf das Urinalbecken auftreffenden und/oder abfließenden Urin zu erkennen.

Die von den HF-Bewegungssensoren erfassten Daten werden von dem in der Urinalsteuerung enthaltenen oder mit dieser verbundenen Datenverarbeitungssystem abgefragt und/oder empfangen. Die Übertragung der Daten erfolgt dabei vorzugsweise über ein drahtloses oder ein vermaschtes Datenübertragungsnetzwerk, wie z. B. über Bluetooth, besonders bevorzugt über Bluetooth mesh. Vorteilhafterweise ermöglicht dies die Kommunikation mit einem Mobilgerät, was den Vorteil einer erleichterten Bedienfunktion sowie einfachen Einstellungs- und Diagnosemöglichkeiten mit sich bringt. Weiterhin vorteilhaft ist, dass eine Kommunikation mit einer Gebäudesteuerung über eine Cloud oder ein Gebäudemanagementsystem ermöglicht wird, was insbesondere ein Abfragen von Betriebsdaten oder ein Anzeigen von Servicebedarf vereinfacht. Weiterhin vorteilhaft an einer Datenübertragung mittels drahtlosem oder vermaschtem Datenübertragungsnetzwerk ist die Ermöglichung der Kommunikation mit anderen Sensorprodukten entweder direkt in einem Netzwerk oder indirekt über wenigstens ein Gateway.

Das Datenverarbeitungssystem verfügt entweder über vorgegebene Richtwerte oder, nach einer gewissen Nutzungsdauer des Urinalsystems, über Erfahrungswerte und/oder eigene Betriebsdaten, beispielsweise bezüglich der üblichen mit einem Urinalspülvorgang verbundenen Abflusszeiten. Abweichungen von den Richtwerten und/oder Erfahrungswerten werden registriert und wenigstens eine Aktion zur Vermeidung der Ursache der Abweichung ausgelöst. Zusätzlich zu den eigenen Betriebsdaten eines einzelnen HF-Bewegungssensors können vom Datenverarbeitungssystem Daten von anderen Sensoren, wie z. B. von Druck- und/oder Durchflusssensoren in einem Wasserzuleitungssystem und/oder einem Abwasserleitungssystem des Urinalsystems, oder aus einer Gebäudesteuerung genutzt werden.

Eine mögliche von der Datenverarbeitungsanlage auszulösende Aktion kann beispielsweise eine Anpassung der Öffnungszeit und/oder der Öffnungsstellung und/oder der Öffnungshäufigkeit des Zulaufventils und/oder ein Absetzen einer Fehlermeldung und/oder einer Servicemeldung sein.

Das Zulaufventil kann beispielsweise ein Magnetventil mit einer definierten Öffnungszeit und/oder Öffnungsstellung und/oder Öffnungshäufigkeit, welches von der Urinalsteuerung angesteuert wird, sein.

Bei einem verstopften Urinalablauf kommt es zum Anstauen von Flüssigkeit im Urinalbecken. Ist der Sensorbereich des Urinalbeckens komplett mit Flüssigkeit gefüllt, erkennt der wenigstens eine HF-Bewegungssensor typischerweise keinen Wasserfluss mehr, da der HF-Bewegungssensor meist die Flüssigkeit nicht durchdringen kann. In dieser Situation erkennt das Datenverarbeitungssystem keine Benutzung mehr und löst keine erneute Spülung aus, d. h. es kommt nicht zum erneuten Öffnen des Zulaufventils. Neben der Reduzierung der Öffnungshäufigkeit des Zulaufventils auf Null kann eine Meldung einer Verstopfung an ein Mobilgerät oder eine Gebäudesteuerung erfolgen.

Alternativ ist auch eine sensorische Erkennung der Verstopfung möglich, indem der/die jeweilige(n) HF-Bewegungssensor(en) nicht nur die Bewegung im Urinalbecken erkennt/erkennen, sondern zwischen leerem und beispielsweise zumindest bis zu einer Markierung gefülltem Urinalbecken unterscheiden kann/können. Hierfür erfolgt bevorzugt eine Signalanalyse der HF-Bewegungssensoren. Die starke Reflexion im Nahbereich der HF-Bewegungssensoren führt auch im Fall eines vollen Urinalbeckens zu geänderten Signalpegeln, wie beispielsweise einer Verschiebung der Offsetspannung des jeweiligen HF-Bewegungssensores. Dieser Effekt entsteht durch eine Änderung der Phasenlage des reflektierten Signals des jeweiligen HF-Bewegungssensors, bedingt durch den Abstand und/oder Materialeigenschaften der reflektierenden stehenden Flüssigkeit im Nahbereich des jeweiligen HF-Bewegungssensors.

Alternativ kann eine Erkennung einer stehenden Flüssigkeit innerhalb des Urinalbeckens mit Hilfe eines anderen Sensorverfahrens erfolgen. Insbesondere kann ein anderes, zur Erkennung statischer Objekte geeignetes HF-Sensorverfahren, beispielsweise unter Verwendung wenigstens eines frequenzmodulierten Dauerstrichradars (frequency modulated continuous wave radar, FMCW), wenigstens eines kapazitiven Sensors und/oder wenigstens eines anderen geeigneten Sensors oder Sensorsystems verwendet werden.

Der unter Verwendung des Datenverarbeitungssystems vermeidbare Fehler, dass der Urinalablauf verstopft ist, schließt eine teilweise oder beginnende als auch eine vollständige Verstopfung des Urinalablaufs ein.

Bei einer beginnenden Verstopfung kommt es zu einer Verzögerung der Ablaufzeiten am oder im Urinalablauf, wodurch die HF-Bewegungssensoren eine länger andauernde Bewegung bzw. eine geringere Fließgeschwindigkeit registriert. Eine Abweichung der Ablaufzeiten von vorzugsweise gespeicherten, aber auch eingebbaren Erfahrungs- und/oder Richtwerten wird von dem Datenverarbeitungssystem erkannt und führt zum Absetzen einer Fehler- und/oder einer Servicemeldung.

Vorteilhafterweise ist das Datenverarbeitungssystem in der Lage zu erkennen, wenn nach einer erfolgten Spülung kein ablaufendes Wasser von den HF-Bewegungssensoren registriert wird. In diesem Fall wird vorteilhafterweise zum einen bis zu einer erneuten Bewegungserkennung kein weiterer Spülvorgang ausgelöst, zum anderen kommt es vorzugsweise zum Absetzen einer Fehler- und oder einer Servicemeldung.

Bei einer Druckschwankung in einem mit dem Urinalsystem verbundenen Abwassersystem, beispielsweise durch eine nicht fachgerechte oder defekt gewordene Installation, wie eine unzureichende Entlüftung der Abwasserleitung, kommt es bei einem Spülvorgang zu starken Druckschwankungen, die zu schwankendem Wasserstand im Siphon bis hin zum Leersaugen führen können. Wird eine solche Schwankung durch die HF-Bewegungssensoren als Bewegung erkannt, können Fehlspülungen ausgelöst werden. Bevorzugt erkennt das Datenverarbeitungssystem eine durch schwankenden Wasserstand ausgelöste Bewegung als solche und löst keinen erneuten Spülvorgang aus. Eine mögliche Aktion ist das Absetzen einer Fehler- und oder einer Servicemeldung und/oder das Verhindern eines erneuten Spülvorgangs. Das Erkennen eines solchen fehlerhaften Bewegungssignals kann durch eine Signalanalyse der üblichen Sensorsignale, die, wie oben erläutert, auf Erfahrungswerten und/oder Richtwerten beruhen können, hinsichtlich des Signalverlaufs erfolgen. Dieser sollte bei einem regulären Spülvorgang ausschwingend sein.

Bei einem Defekt des Flüssigkeitszulaufes kann es entweder dazu kommen, dass die HF-Bewegungssensoren keine Bewegung mehr registrieren, da das Ventil nicht öffnet und keine Flüssigkeit fließt, dass die HF-Bewegungssensoren permanent Bewegung registrieren, da das Ventil nicht vollständig schließt, oder, dass die HF-Bewegungssensoren eine verringerte Flüssigkeitsmenge registrieren, da das Ventil nur unvollständig öffnet und beim Spülvorgang nur eine verringerte Wassermenge freigesetzt wird. Die vom Datenverarbeitungssystem ausgelöste Aktion ist dann vorteilhafterweise das Absetzen einer Fehler- und oder einer Servicemeldung.

Falls die HF-Bewegungssensoren einen permanenten Flüssigkeitsstrom registriert, kann durch das Ansteuern eines Sperrventils, bevorzugt über ein drahtloses oder vermaschtes Datenübertragungsnetzwerk, wie z. B. über Bluetooth oder Bluetooth mesh, die Wasserversorgung des erfindungsgemäßen Urinalsystems unterbrochen werden.

Es ist besonders von Vorteil, wenn die Urinalsteuerung den wenigstens einen HF-Bewegungssensor permanent oder in einem gewissen vorbestimmten Zeitabstand mit Impulsen ansteuert. Bei einem Ausfall wenigstens eines des wenigstens einen HF-Bewegungssensors wird durch das Datenverarbeitungssystem eine fehlende Reaktion auf die Impulse erkannt und eine Fehler- und/oder einer Servicemeldung abgesetzt.

Das Datenverarbeitungssystem ist vorzugsweise ausgebildet, um auf Basis der ausgewerteten Daten eine vordefinierte Urinalnutzungssituation und/oder -frequentierung zu erkennen und darauf basierend bei wenigstens einem nachfolgenden Urinalspülvorgang eine Öffnungszeit und/oder eine Öffnungsstellung und/oder eine Öffnungshäufigkeit des Zulaufventils daran anzupassen.

Vorteilhafterweise können dadurch beispielsweise Zeiten hoher Frequentierung identifiziert und für die jeweilige Situation geeignete und wirksame Wassersparprogramme aktiviert werden. Beispielsweise kann ein Spülintervall und/oder eine Spülmenge an eine prognostizierte Nutzerzahl des Urinalsystems angepasst und beispielsweise zu geeigneten Zeiten eine Reinigungsspülung mit im Vergleich zum regulären Spülvorgang erhöhter Spülmenge ausgelöst werden.

Bevorzugt weist das Urinalsystem ferner wenigstens einen Drucksensor und/oder wenigstens einen Durchflusssensor in dem Flüssigkeitszulauf auf und/oder ist mit wenigstens einem Drucksensor und/oder wenigstens einem Durchflusssensor in dem Flüssigkeitszulauf über ein vermaschtes und/oder ein drahtloses lokales Datenübertragungsnetzwerk gekoppelt.

Vorteilhafterweise kann durch die Kombination der Signale wenigstens eines der HF-Bewegungssensoren mit den Signalen des wenigstens einen Drucksensors und/oder des wenigstens einen Durchflusssensors eine Unterscheidung verschiedener Situationen erfolgen, die zu gleichen oder ähnlichen Reaktionen wenigstens eines der HF-Bewegungssensoren führen. Eine ausbleibende Reaktion wenigstens eines der HF-Bewegungssensoren auf eine zuvor ausgelöste Spülung kann beispielsweise darauf zurückzuführen sein, dass eine vollständige Verstopfung vorliegt, aufgrund derer wenigstens einer der HF-Bewegungssensoren blind ist, dass das Zulaufventil aufgrund eines Ventildefektes oder eines Elektronikdefektes nicht öffnet oder dass Fehler in der Wasserversorgung vorliegen.

Der wenigstens eine Drucksensor im Flüssigkeitszulauf ist zweckmäßigerweise in der Lage zu erkennen, ob eine Wasserversorgung gegeben ist, während der wenigstens eine Durchflusssensor im Flüssigkeitszulauf in der Lage ist zu erkennen, ob Wasser aus dem Flüssigkeitszulauf fließt oder nicht. Die entsprechenden Situationen können anhand typischer Signalverläufe wenigstens eines des wenigstens einen HF-Bewegungssensors im Zusammenhang mit Daten des wenigstens einen Drucksensors und/oder des wenigstens einen Durchflusssensors in dem Flüssigkeitszulauf mit Hilfe eines Klassifikators oder eines anderen geeigneten KI-Algorithmus', also eines künstliche Intelligenz nutzenden Algorithmus', erkannt und voneinander unterschieden werden.

Das erfindungsgemäße Urinalsystem kann ein Urinalbecken oder eine Mehrzahl von Urinalbecken aufweisen.

Der wenigstens eine HF-Bewegungssensor ist vorzugsweise an einer Rückseite des Urinalbeckens in unmittelbarer räumlicher Nähe zum Urinalablauf angeordnet. Vorzugsweise ist der wenigstens eine HF-Bewegungssensor nicht in die Richtung einer im Geruchsverschluss des Urinalablaufs stehenden Sperrflüssigkeit ausgerichtet.

Mit dem wenigstens einen HF-Bewegungssensor können zu- und abfließende Flüssigkeiten im Bereich des Urinalablaufs erkannt werden. Der wenigstens eine HF-Bewegungssensor kann selbst oder mittels wenigstens einer den wenigstens einen HF-Bewegungssensor aufweisenden oder haltenden Haltevorrichtung an der Rückseite des Urinalbeckens angeklebt, verschraubt oder anderweitig befestigt sein.

Vorteilhafterweise wird durch die Anordnung und Ausrichtung des Bewegungssensors gewährleistet, dass dieser in der Lage ist, die Bewegung des bei einem Urinalspülvorgang vom Flüssigkeitszulauf zum Urinalablauf fließenden Spülwassers und/oder des bei Benutzung des Urinalsystems auf das Urinalbecken auftreffenden und/oder abfließenden Urins zu erkennen.

Das erfindungsgemäße Urinalsystem weist ferner wenigstens einen Drucksensor und/oder wenigstens einen Durchflusssensor in dem Flüssigkeitszulauf auf und/oder ist mit wenigstens einem Drucksensor und/oder wenigstens einem Durchflusssensor in dem Flüssigkeitszulauf über ein vermaschtes und/oder ein drahtloses lokales Datenübertragungsnetzwerk gekoppelt.

Der wenigstens eine Drucksensor im Flüssigkeitszulauf erkennt vorteilhafterweise, ob eine Wasserversorgung gegeben ist, während der wenigstens eine Durchflusssensor im Flüssigkeitszulauf erkennt, ob Wasser aus dem Flüssigkeitszulauf fließt oder nicht.

Wird von dem wenigstens einen Drucksensor eine Wasserversorgung als gegeben gemeldet, während der wenigstens eine HF-Bewegungssensor keine Fließbewegung während eines Spülvorganges registriert, so ist es wahrscheinlich, dass entweder eine vollständige Verstopfung vorliegt oder ein Ventildefekt oder ein Elektronikdefekt dazu führt, dass das Zulaufventil nicht öffnet. Meldet der wenigstens eine Durchflusssensor im Flüssigkeitszulauf, dass während eines Spülvorganges Wasser aus dem Flüssigkeitszulauf fließt, während der wenigstens eine HF-Bewegungssensor keine Fließbewegung registriert, so wird das Datenverarbeitungssystem eine vollständige Verstopfung als wahrscheinlichstes Szenario annehmen.

Vorteilhafterweise kann somit durch die Kombination der Signale wenigstens eines des wenigstens einen HF-Bewegungssensors mit den Signalen des wenigstens einen Drucksensors und/oder des wenigstens einen Durchflusssensors eine Unterscheidung verschiedener Situationen erfolgen, die zu gleichen oder ähnlichen Reaktionen wenigstens eines des wenigstens einen HF-Bewegungssensors führen. Die entsprechenden Situationen können anhand typischer Signalverläufe wenigstens eines des wenigstens einen HF-Bewegungssensors im Zusammenhang mit Daten des wenigstens einen Drucksensors und/oder des wenigstens einen Durchflusssensors in dem Flüssigkeitszulauf beispielsweise mit Hilfe eines Klassifikators oder eines anderen geeigneten KI-Algorithmus' erkannt und voneinander unterschieden werden.

Weiterhin kann durch Vernetzung der Urinalsteuerung mit wenigstens einem Druck- und/oder Durchflusssensor oder durch direkte Integration wenigstens eines Druck- und/oder Durchflusssensors in das Urinalsystem die Spülzeit in Abhängigkeit von einem tatsächlichen Wasserdruck und/oder Durchfluss angepasst und damit die Spülmenge an dem jeweiligen Urinal deutlich genauer eingestellt werden. Bei Unterschreitung eines bestimmten Mindest-Wasserdrucks oder Mindest-Durchflusses für eine bestimmte Zeit kann durch das erfindungsgemäße Urinalsystem eine Fehlermeldung und/oder eine Servicemeldung abgesetzt werden.

Die mit dem Zulaufventil gekoppelte Urinalsteuerung weist ein Datenverarbeitungssystem auf und/oder ist mit einem Datenverarbeitungssystem verbunden. Die von dem wenigstens einen HF-Bewegungssensor erfassten Daten werden von dem Datenverarbeitungssystem abgefragt und/oder empfangen. Die Übertragung der Daten erfolgt dabei vorzugsweise über ein drahtloses oder vermaschtes Datenübertragungsnetzwerk, wie z. B. über Bluetooth oder Bluetooth mesh. Vorteilhafterweise ermöglicht dies die Kommunikation mit einem Mobilgerät, mit einer Gebäudesteuerung über eine Cloud oder ein Gebäudemanagementsystem und mit anderen Sensorprodukten entweder direkt im Netzwerk oder indirekt über wenigstens ein Gateway. Damit einher geht der Vorteil einer erleichterten Bedienfunktion sowie einfachen Einstellungs- und/oder Diagnosemöglichkeiten und die Vereinfachung des Abfragens von Betriebsdaten oder des Anzeigens von Servicebedarf.

Das Datenverarbeitungssystem registriert Abweichungen von vorgegebenen Richtwerten oder von Erfahrungswerten und/oder eigenen Betriebsdaten, beispielsweise bezüglich der üblichen mit einem Urinalspülvorgang verbundenen Abflusszeiten oder der Menge der während eines Spülvorgangs abfließenden Flüssigkeit. Bei Abweichungen kann das Datenverarbeitungssystem wenigstens eine Aktion zur Vermeidung der Ursache der jeweiligen Abweichung auslösen. Zusätzlich zu den eigenen Betriebsdaten eines einzelnen HF-Bewegungssensors können vom Datenverarbeitungssystem Daten von anderen Sensoren oder aus einer Gebäudesteuerung genutzt werden. Beispielsweise können Pausenzeiten in einer öffentlichen Einrichtung, wie einem Theater oder einer Sportstätte, oder die Öffnungszeiten eines Gebäudes berücksichtigt werden.

Eine mögliche von der Datenverarbeitungsanlage auszulösende Aktion zur Vermeidung eines Fehlers des Urinalsystems ist insbesondere die Anpassung der Öffnungszeit und/oder der Öffnungsstellung und/oder der Öffnungshäufigkeit des Zulaufventils und/oder das Absetzen einer Fehlermeldung und/oder einer Servicemeldung.

Das Zulaufventil kann beispielsweise ein Magnetventil mit einer definierten Öffnungszeit und/oder Öffnungsstellung und/oder Öffnungshäufigkeit, welches von der Urinalsteuerung angesteuert wird, sein.

Wie bereits weiter oben erläutert, kommt es bei einem vollständig verstopften Urinalablauf zum Anstauen von Flüssigkeit im Urinalbecken. Da der wenigstens eine HF-Bewegungssensor die Flüssigkeit typischerweise nicht durchdringen kann, erkennt er keinen Wasserfluss mehr, sobald der Sensorbereich des Urinalbeckens komplett mit Flüssigkeit gefüllt ist. Meldet der wenigstens eine Durchflusssensor im Flüssigkeitszulauf gleichzeitig einen Wasserdurchlauf und somit einen erfolgten Spülvorgang, erkennt das Datenverarbeitungssystem eine mögliche Verstopfung und löst keine erneute Spülung aus, d.h. es kommt nicht zum erneuten Öffnen des Zulaufventils. Zudem kann unmittelbar eine Fehler- und/oder Servicemeldung abgesetzt werden.

Eine sensorische Erkennung einer vollständigen Verstopfung ist ebenfalls durch die Unterscheidung zwischen einem vollständig oder bis zu einer bestimmten Markierung mit Flüssigkeit gefüllten und einem leeren Urinalbecken mit regulärem Wasserstand im Siphon möglich. Eine solche Unterscheidung kann durch eine Signalanalyse des HF-Bewegungssensors getroffen werden. Wie bereits weiter oben erläutert, ergibt sich, bedingt durch den Abstand und/oder Materialeigenschaften der reflektierenden stehenden Flüssigkeit im Nahbereich des Sensors, eine Änderung der Phasenlage des reflektierten Signals des HF-Bewegungssensors. Dies führt zu einer Verschiebung der Offsetspannung des HF-Bewegungssensors und somit zu geänderten Signalpegeln, was wiederum vom Datenverarbeitungssystem erkannt werden kann.

Alternativ kann die Erkennung der stehenden Flüssigkeit mit Hilfe eines anderen Sensorverfahrensvorgenommen werden. Insbesondere kann ein anderes, zur Erkennung statischer Objekte geeignetes HF-Sensorverfahren, beispielsweise unter Verwendung wenigstens eines Frequenzmodulierten Dauerstrichradars (frequency modulated continuous wave radar, FMCW), wenigstens eines kapazitiven Sensors und/oder wenigstens eines anderen geeigneten Sensors oder Sensorsystems, genutzt werden.

Liegt zunächst erst eine beginnende Verstopfung an dem Urinalsystem vor, wird bei dem erfindungsgemäßen Urinalsystem von dem HF-Bewegungssensor wenigstens eine verzögerte Ablaufzeit über einen längeren Zeitraum registriert. So würde bei einer teilweisen Verstopfung die gleiche Menge an Spülwasser eine längere Ablaufzeit als bei nicht vorliegender Verstopfung benötigen. Erkennt das Datenverarbeitungssystem eine derartige Abweichung von Erfahrungs- und/oder Richtwerten, so löst es wenigstens eine Aktion zum Vermeiden weiterer Abweichungen aus. Eine solche Aktion kann ein Absetzen einer Fehler- und/oder einer Servicemeldung und/oder eine Verhinderung weiterer Spülvorgänge sein.

Bei einer Druckschwankung in einem mit dem Urinalsystem verbundenen Abwassersystem, beispielsweise durch eine nicht fachgerechte Installation, wie eine unzureichende Entlüftung der Abwasserleitung, kommt es bei einem Spülvorgang zu starken Druckschwankungen. Diese können wiederum zu schwankendem Wasserstand im Siphon bis hin zu einem Leersaugen des Siphons führen. Wird eine solche Schwankung durch den wenigstens einen HF-Bewegungssensor als Bewegung erkannt, können Fehlspülungen ausgelöst werden. Bevorzugt erkennt das Datenverarbeitungssystem eine durch schwankenden Wasserstand ausgelöste Bewegung als solche und löst keinen erneuten Spülvorgang aus. Eine mögliche Aktion ist das Absetzen einer Fehler- und oder einer Servicemeldung und/oder das Verhindern eines erneuten Spülvorgangs. Das Erkennen eines solchen fehlerhaften Bewegungssignals kann durch eine Signalanalyse der auf Erfahrungswerten und/oder Richtwerten beruhenden üblichen Sensorsignale hinsichtlich des Signalverlaufs erfolgen. Dieser sollte bei einem regulären Spülvorgang ausschwingend sein.

Bei einem Defekt des Flüssigkeitszulaufes kann es unterschiedliche Szenarien geben. So kann der wenigstens eine HF-Bewegungssensor beispielsweise keine Bewegung mehr registrieren, wenn das Ventil nicht öffnet und keine Flüssigkeit fließt. Der wenigstens eine HF-Bewegungssensor kann auch permanent Bewegung registrieren, wenn das Ventil nicht vollständig schließt. Zudem ist es möglich, dass der wenigstens eine HF-Bewegungssensor eine verringerte Flüssigkeitsmenge registriert, wenn das Ventil nur unvollständig öffnet und beim Spülvorgang nur eine verringerte Wassermenge freigesetzt wird. Die vom Datenverarbeitungssystem ausgelöste Aktion ist vorteilhafterweise das Absetzen einer Fehler- und/oder einer Servicemeldung.

Falls der wenigstens eine HF-Bewegungssensor einen permanenten Flüssigkeitsstrom registriert, kann durch das Ansteuern eines Sperrventils, bevorzugt über ein drahtloses oder vermaschtes Datenübertragungsnetzwerk, wie z. B. über Bluetooth oder Bluetooth mesh, die Wasserversorgung des erfindungsgemäßen Urinalsystems unterbrochen werden.

Vorteilhafterweise steuert die Urinalsteuerung den wenigstens einen HF-Bewegungssensor permanent oder in einem gewissen vorbestimmten Zeitabstand mit Impulsen an. Bei einem Ausfall wenigstens eines des wenigstens einen HF-Bewegungssensors wird die fehlende Reaktion auf die Impulse erkannt und eine Fehler- und oder einer Servicemeldung abgesetzt.

Das Datenverarbeitungssystem ist vorzugsweise ausgebildet, um auf Basis der ausgewerteten Daten eine vordefinierte Urinalnutzungssituation und/oder -frequentierung zu erkennen und darauf basierend bei wenigstens einem nachfolgenden Urinalspülvorgang eine Öffnungszeit und/oder eine Öffnungsstellung und/oder eine Öffnungshäufigkeit des Zulaufventils daran anzupassen.

Vorteilhafterweise können dadurch beispielsweise Zeiten hoher Frequentierung identifiziert und für die jeweilige Situation geeignete und wirksame Wassersparprogramme aktiviert werden. Beispielsweise kann ein Spülintervall und/oder eine Spülmenge an eine prognostizierte Nutzerzahl des Urinalsystems angepasst und zu geeigneten Zeiten eine Reinigungsspülung mit im Vergleich zu einem regulären Spülvorgang erhöhter Spülmenge ausgelöst werden.

Bevorzugt weist das erfindungsgemäße Urinalsystem eine mit dem Datenverarbeitungssystem gekoppelte Fehler- und/oder Servicemeldungsausgabeeinheit auf. Im Falle eines vom Datenverarbeitungssystem erkannten Fehlers wird die Fehler- und/oder Servicemeldungsausgabeeinheit angewiesen, eine Fehlermeldung und/oder eine Servicemeldung abzusetzen, wodurch vorteilhafterweise der Zeitraum bis zum Erkennen des Fehlers durch einen Nutzer und/oder einen Servicemitarbeiter deutlich verkürzt wird.

In einer vorteilhaften Ausführungsform weist das Datenverarbeitungssystem wenigstens einen maschinell lernenden und/oder ein künstliches neuronales Netz aufweisenden und/oder ein Expertensystem beinhaltenden Datenverarbeitungsblock auf.

Durch die Anwendung des wenigstens einen maschinell lernenden und/oder ein künstliches neuronales Netz aufweisenden und/oder ein Expertensystem beinhaltenden Datenverarbeitungsblockes ist das Datenverarbeitungssystem des erfindungsgemäßen Urinalsystems vorteilhafterweise in der Lage, auf Basis eigener Betriebsdaten und zusätzlicher Daten von anderen Sensoren oder aus einer Gebäudesteuerung intelligente Entscheidungen zu treffen. Auf diese Weise können beispielsweise Wasserverbrauch und/oder Komfort für den oder die Nutzer optimiert und das Maß an von Menschen auszuübenden Aktionen, beispielsweise zur Wartung des Urinalsystems, reduziert werden.

Die Implementierung von Kl-Algorithmen, also künstliche Intelligenz nutzenden Algorithmen, erfolgt vorzugsweise direkt in wenigstens einem des wenigstens einen HF-Bewegungssensors, als sogenannte "embedded Kl". Bevorzugt verfügt wenigstens ein mit dem HF-Bewegungssensors verbundener Microcontroller über die dafür erforderlichen Ressourcen, wie einen geeignet großen Speicher, eine entsprechende Rechenleistung und/oder eine Verfügbarkeit über weitere geeignete Werkzeuge.

Die Aufgabe wird ferner gelöst durch ein Wasserverbrauchersystem mit einem erfindungsgemäßen Urinalsystem, wobei erfindungsgemäß das Wasserverbrauchersystem zusätzlich zu dem Urinalsystem wenigstens einen weiteren Wasserverbraucher aufweist, an dem wenigstens ein weiterer Sensor vorgesehen ist, wobei das Datenverarbeitungssystem mit dem wenigstens einen weiteren Sensor gekoppelt ist und ausgebildet ist, die von dem wenigstens einen weiteren Sensor erfassten und durch das Datenverarbeitungssystem empfangenen Daten ebenfalls rechentechnisch auszuwerten und in die Fehlererkennung und/oder -vermeidung einzubeziehen.

Das erfindungsgemäße Wasserverbrauchersystem kann ein Urinalsystem oder eine Mehrzahl von Urinalsystemen aufweisen, wobei das Urinalsystem oder die Urinalsysteme jeweils ein Urinalbecken oder eine Mehrzahl von Urinalbecken aufweisen kann/können.

Der wenigstens eine weitere Wasserverbraucher ist vorzugsweise ein Waschbecken oder eine Toilette oder wenigstens ein weiteres Urinalsystem.

Der wenigstens eine weitere Sensor kann wenigstens ein Infrarotbewegungs- oder - näherungssensor, wenigstens ein kapazitiver Bewegungs- oder Näherungssensor, wenigstens eine berührungslose Drückerplatte, wenigstens ein Temperatursensor und/oder wenigstens ein HF-Bewegungs- oder -näherungssensor sein. So kann beispielsweise der wenigstens eine Temperatursensor auch zur Detektion einer WC- oder Urinalbenutzung eingesetzt werden, indem dieser eine durch einen Urinfluss in einem WC oder Urinal hervorgerufene Temperaturänderung erfasst.

Der wenigstens eine weitere Sensor kann auch unabhängig von dem Urinalsystem eingesetzt werden, um z. B. eine Verstopfung an dem wenigstens einen weiteren Wasserverbraucher, wie einem Waschtisch oder einem WC, zu erkennen. In diesem Fall ist es zwar möglich, aber nicht erforderlich, dass mittels des wenigstens einen weiteren Sensors der jeweilige weitere Wasserverbraucher gesteuert wird.

Ferner ist es möglich, mit Hilfe des wenigstens einen weiteren Sensors der Urinalsteuerung des Urinalsystems des erfindungsgemäßen Wasserverbrauchersystems mitzuteilen, dass beispielsweise ein in einem Nachbarraum befindliches WC gespült wird, wodurch beispielsweise eine der Urinalsteuerung mittels eines Drucksensors übermittelte leichte Druckschwankung auf diesen Spülvorgang zurückgeführt werden kann.

Beispielsweise kann der wenigstens eine weitere Sensor in Relation zu dem weiteren Wasserverbraucher, an dem er vorgesehen ist, auch lediglich ein eine Verstopfung des jeweiligen Wasserverbrauchers erkennender Verstopfungssensor sein. Eine solche Verstopfung kann jedoch von dem wenigstens einen weiteren Sensor an die Urinalsteuerung und/oder an wenigstens eine weitere Steuerung eines der anderen Wasserverbraucher gemeldet werden.

Der wenigstens eine weitere Sensor kann am Ablauf des weiteren Wasserverbrauchers, aber auch an einer anderen Position angeordnet sein.

Die Daten, die von dem wenigstens einen weiteren Sensor an dem wenigstens einen weiteren Wasserverbraucher erfasst werden, können erfindungsgemäß an das Datenverarbeitungssystem und/oder die Urinalsteuerung übermittelt werden. Dadurch erfährt das Datenverarbeitungssystem und/oder die Urinalsteuerung, dass beispielsweise eine Toilette spült und es zu Druckschwankungen im Abfluss und/oder im Abwassersystem kommen kann.

Mit Hilfe des wenigstens einen weiteren Sensors können auch Wechselwirkungen in dem Wasserverbrauchersystem erkannt werden, die in die Urinalsteuerung einfließen können. Beispielsweise kann, wie oben erwähnt, eine Spülung an einem WC oder einem anderen Urinal zu Druckschwankungen in dem Urinalablauf des Urinalsystems führen. Entsprechend kann eine Fehlauslösung einer Spülung an dem Urinalsystem vermieden werden. Dies gilt entsprechend für andere, unter zusätzlicher Verwendung von Daten des weiteren Sensors erkennbaren Nutzungssituationen.

Bei einer Druckschwankung in einem mit dem Wasserverbrauchersystem verbundenen Abwassersystem, beispielsweise durch eine nicht fachgerechte Installation, wie eine unzureichende Entlüftung der Abwasserleitung, kommt es bei einem Spülvorgang zu starken Druckschwankungen, die zu schwankendem Wasserstand im Siphon oder in den Siphonen des Urinalsystems bzw. der Urinalsysteme und/oder des wenigstens einen weiteren Wasserverbrauchers des Wasserverbrauchersystems bis hin zum Leersaugen führen können. Wird eine solche Schwankung durch wenigstens einen des wenigstens einen HF-Bewegungssensors als Bewegung erkannt, können Fehlspülungen ausgelöst werden.

Bevorzugt erkennt das Datenverarbeitungssystem eine durch schwankenden Wasserstand ausgelöste Bewegung als solche und löst keinen erneuten Spülvorgang aus. Eine mögliche Aktion ist ein Absetzen einer Fehler- und/oder einer Servicemeldung und/oder ein Verhindern eines erneuten Spülvorgangs. Das Erkennen eines solchen fehlerhaften Bewegungssignals kann durch eine Signalanalyse der üblichen, auf Erfahrungswerten und/oder Richtwerten beruhenden Sensorsignale hinsichtlich des Signalverlaufs erfolgen. Dieser bei einem regulären Spülvorgang ausschwingend sein. Zudem kann eine Auswertung von Daten anderer Bewegungssensoren innerhalb des Wasserverbrauchersystems erfolgen, wobei der Zeitpunkt der Spülungen anderer Urinale oder Toiletten in Beziehung zum Signal des HF-Bewegungssensors des jeweiligen Urinalsystems gesetzt wird.

Bevorzugt sind die Wasserverbraucher und das Urinalsystem über ein vermaschtes und/oder ein drahtloses lokales Datenübertragungsnetzwerk miteinander verbunden.

Besonders bevorzugt erfolgt diese Verbindung und eine darauf basierende Kommunikation zwischen den Wasserverbrauchern und dem Urinalsystem auf Basis eines drahtlosen oder vermaschten Datenübertragungsnetzwerkes, wie Bluetooth oder Bluetooth mesh. Vorteilhafterweise ermöglicht diese Form der Verbindung die Kommunikation des Wasserverbrauchersystems mit einem Mobilgerät, was den Vorteil einer erleichterten Bedienfunktion sowie einfachen Einstellungs- und Diagnosemöglichkeiten mit sich bringt. Weiterhin vorteilhaft ist, wenn eine Kommunikation des Wasserverbrauchersystems mit einer Gebäudesteuerung über eine Cloud oder ein Gebäudemanagementsystem ermöglicht wird, was insbesondere das Abfragen von Betriebsdaten oder das Anzeigen von Servicebedarf vereinfacht. Weiterhin vorteilhaft an einer Datenübertragung mittels drahtlosem oder vermaschtem Datenübertragungsnetzwerk, wie Bluetooth oder Bluetooth mesh, ist die Ermöglichung der Kommunikation mit anderen Sensorprodukten entweder direkt im Netzwerk oder indirekt über wenigstens ein Gateway.

Die Erfindung wird nachfolgend anhand von Ausführungsbeispielen und zugehörigen Figuren näher erläutert, ohne dabei auf diese beschränkt zu sein.

Dabei zeigen:
- Figur 1:: eine schematische Ansicht einer Ausführungsform eines erfindungsgemäßen Urinalsystems während eines Spülvorganges;
- Figur 2:: eine schematische Ansicht einer Ausführungsform eines erfindungsgemäßen Urinalsystems mit vollständig verstopftem Urinalablauf;
- Figur 3:: ein Fließschema einer wasserdruckangepassten Spülregelung eines erfindungsgemäßen Urinalsystems;
- Figur 4:: ein Fließschema zur Erkennung einer Reaktion auf eine Verstopfung einer Ausführungsform eines erfindungsgemäßen Urinalsystems;
- Figur 5:: ein Fließschema zur Ventildiagnose an einer Ausführungsform eines erfindungsgemäßen Urinalsystems;
- Figur 6:: ein Fließschema zum Wassersparen an einer Ausführungsform eines erfindungsgemäßen Urinalsystems.

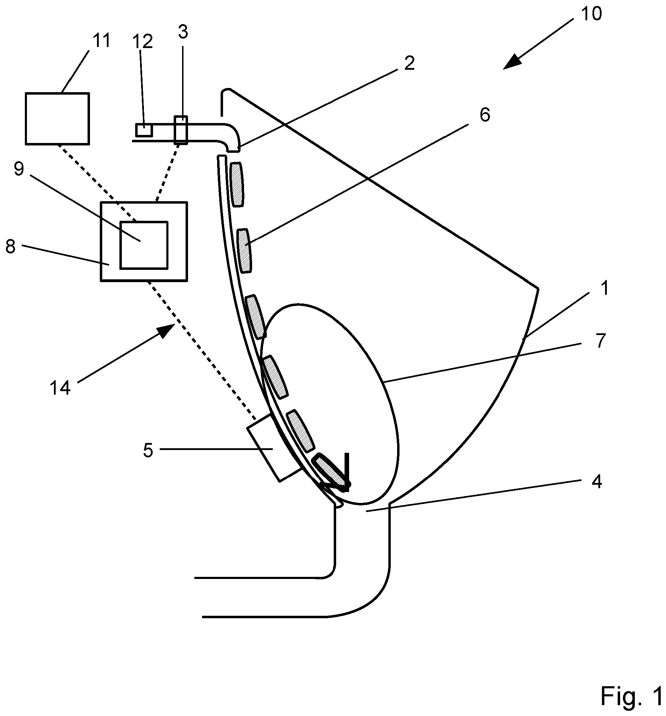

In Figur 1 ist eine schematische Ansicht einer Ausführungsform eines erfindungsgemäßen Urinalsystems 10 während eines Spülvorganges dargestellt.

Das Urinalsystem 10 weist ein Urinalbecken 1 mit einem Flüssigkeitszulauf 2 und einem Urinalablauf 4 auf.

An dem Flüssigkeitszulauf 2 ist ein Zulaufventil 3 vorgesehen, mit dem der Flüssigkeitszulauf 2 geöffnet oder geschlossen werden kann. Bei geöffnetem Zulaufventil 3 fließt Spülwasser 6 aus dem Flüssigkeitszulauf 2 über das Urinalbecken 1 bis zum Urinalablauf 4.

An der Rückseite des Urinalbeckens 1 ist in dem gezeigten Ausführungsbeispiel ein HF-Bewegungssensor 5 befestigt. In anderen Ausführungsformen der vorliegenden Erfindung können auch mehrere HF-Bewegungssensoren 5 an dem Urinalbecken 1 und/oder an dem Urinalablauf 4 vorgesehen sein.

Der HF-Bewegungssensor 5 ist dabei derart ausgerichtet, dass sein Erfassungsfeld 7 im Inneren des Urinalbeckens 1 liegt. Der HF-Bewegungssensor 5 ist somit in der Lage, eine Bewegung eines fließenden Spülwassers 6 zu registrieren, sobald dieses das Erfassungsfeld 7 des HF-Bewegungssensors 5 passiert.

Die vom HF-Bewegungssensor 5 aufgenommenen Daten werden an ein Datenverarbeitungssystem 9 einer Urinalsteuerung 8 des Urinalsystems 10 übermittelt und von diesem rechentechnisch ausgewertet. Das Datenverarbeitungssystem 9 ist in dem in Figur 1 gezeigten Ausführungsbeispiel ein in der Urinalsteuerung 8 integrierter Mikrocontroller, kann aber auch in anderen Ausbildungen der Erfindung separat von der Urinalsteuerung 8 vorgesehen und z. B. eine Cloud oder ein Gateway sein. Das Datenverarbeitungssystem 9 ist in dem gezeigten Ausführungsbeispiel mit einer Fehler- und/oder Servicemeldungsausgabeeinheit 11 gekoppelt.

Wird auf Basis dieser übermittelten Daten wenigstens ein Fehler des Urinalsystems 10 erkannt, so kann das Datenverarbeitungssystem 9 wenigstens eine entsprechende Aktion auslösen, um den wenigstens einen Fehler zu vermeiden. Eine solche Aktion kann beispielsweise das Verhindern einer erneuten Öffnung des Zulaufventils 3 und/oder das Absetzen einer Fehler- und/oder Servicemeldung an die Fehler- und/oder Servicemeldungsausgabeeinheit 11 sein.

Im Flüssigkeitszulauf 2 ist in der in Figur 1 gezeigten Ausführungsform der Erfindung ein Drucksensor 12 angeordnet. In anderen Ausführungsformen der vorliegenden Erfindung kann anstelle des Drucksensors 12 oder zusätzlich zu dem Drucksensor 12 auch ein Durchflusssensor angeordnet sein. Darüber hinaus können im Verlauf des Flüssigkeitszulaufes 2 auch mehrere Drucksensoren 12 und/oder Durchflusssensoren angeordnet sein.

Bei dem Urinalsystem 10 fließt Urin über die Innenseite des typischerweise aus Keramik bestehenden Urinalbeckens 1 in den Urinalablauf 4. Die fließende Flüssigkeit, also der Urin, wird durch den HF-Bewegungssensor 5 erkannt. Der HF-Bewegungssensor 5 sendet ein entsprechendes Signal an die Urinalsteuerung 8, welche bei Erkennung eines bestimmten Maßes an Flüssigkeitsbewegung in einer definierten Zeit das Zulaufventil 3 in der Flüssigkeitszuleitung 2 für eine bestimmte Zeit öffnet und somit eine Spülung des Urinals auslöst.

Beispielsweise wird für einen Spülvorgang das Zulaufventil 3, das z. B. ein Magnetventil ist, je nach eingestellter Spülmenge für ca. 2 bis 8 Sekunden geöffnet. Das Wasser fließt nach Schließen des Zulaufventils 3 für eine bestimmte Zeit nach, bedingt durch verschiedene Effekte:
- hydraulische Verzögerung des Zulaufventils 3, welche typischerweise in einer Größenordnung von 1 bis 2 Sekunden liegt, und/oder
- langsames Nachlaufen von Flüssigkeit aus Schläuchen oder Rohren zwischen Zulaufventil 3 und Urinaleinlauf und/oder einem Wasserreservoir, was über einen längeren Zeitraum von bis zu 30 Sekunden erfolgen kann, und/oder
- langsames Ablaufen von Flüssigkeit von der Keramikoberfläche des Urinalbeckens 1, was in einem Zeitraum von 5 bis 10 Sekunden erfolgen kann, und/oder
- langsames Ablaufen von Flüssigkeit bedingt durch einen teilweise verstopften Urinalablauf 4, was eine längere Beobachtung des Abfließens der Flüssigkeit durch den wenigstens einen HF-Bewegungssensor 5 führt.

Dadurch, dass bei der vorliegenden Erfindung kontinuierlich oder etappenweise von dem wenigstens einen HF-Bewegungssensor 5 erfasste Bewegungsdaten an die Urinalsteuerung 8 übermittelt werden, wird erfindungsgemäß durch das mit der Urinalsteuerung 8 verbundene oder darin integrierte Datenverarbeitungssystem 9 ein typisches Verhalten eingelernt, wobei durch eine ebenfalls durch das Datenverarbeitungssystem 9 vorgenommene Trendanalyse Abweichungen von einem Normalbetrieb, wie eine beginnende Verstopfung durch langsam ansteigende Ablaufzeit von Flüssigkeit am Urinalsystem 10, erkannt werden. Dabei können bei der vorliegenden Erfindung Umgebungsbedingungen, wie z. B. Reinigungsvorgänge an dem Urinalsystem 10 und/oder ein in der Flüssigkeitszuleitung 2 erfasster Wasserdruck, mit beachtet werden.

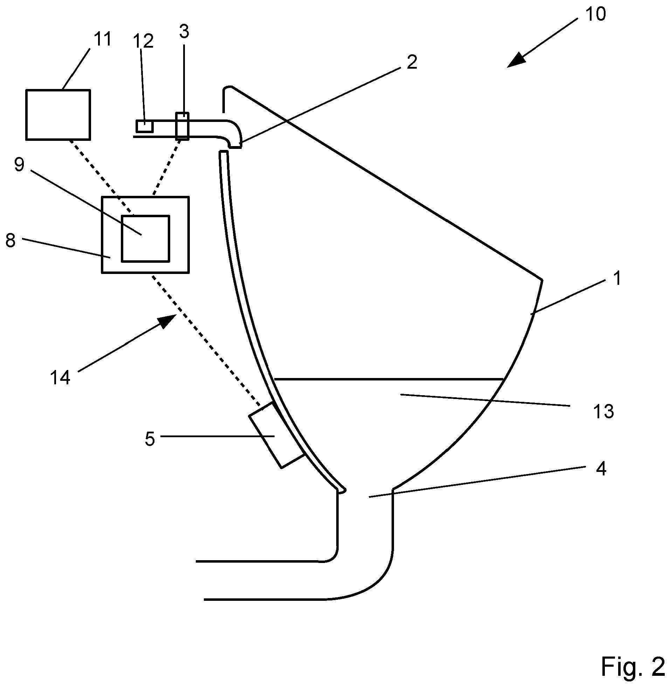

Figur 2 zeigt eine schematische Ansicht eines wie in Figur 1 ausgebildeten Urinalsystems 10 mit vollständig verstopftem Urinalablauf 4. Im Urinalbecken 1 steht über dem verstopften Urinalablauf 4 eine Flüssigkeit 13. Der in Figur 1 gezeigte Erfassungsbereich 7 des HF-Bewegungssensors 5 ist in dem in Figur 2 gezeigten Zustand komplett mit der Flüssigkeit 13 überdeckt.

Da der HF-Bewegungssensor 5 die Flüssigkeit 13 nicht durchdringen kann, registriert er keine Bewegung von auftreffendem Urin und somit auch keine Benutzung des Urinals. Das Datenverarbeitungssystem 9 löst somit keine Öffnung des Zulaufventils 3 des Flüssigkeitszulaufs 2 aus. Neben Verhinderung einer erneuten Öffnung des Zulaufventils 3 kann eine Meldung einer Verstopfung an ein Mobilgerät oder eine Gebäudesteuerung erfolgen.

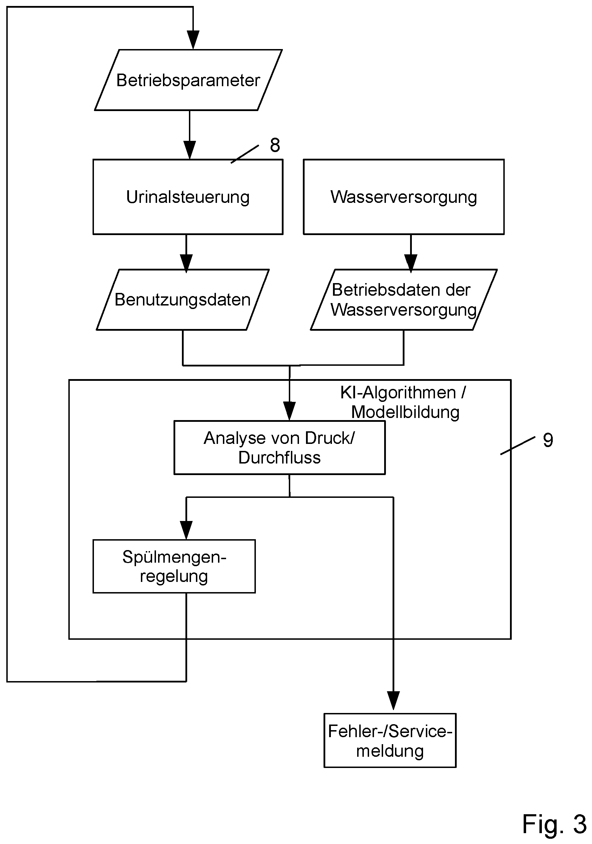

In Figur 3 ist ein Fließschema einer wasserdruckangepassten Spülregelung einer Ausführungsform eines erfindungsgemäßen Urinalsystems 10 dargestellt, welches ähnlich wie in Figur 1 und 2 ausgebildet sein kann, weshalb im Folgenden auf die in Figur 1 und 2 verwendeten Bezugszeichen Bezug genommen wird.

Die Urinalsteuerung 8 ist mit wenigstens einem HF-Bewegungssensor 5 zur Erkennung einer Benutzung des Urinalystems 10 und wenigstens einem Aktor zur Auslösung einer Spülung gekoppelt. Der wenigstens eine Aktor ist ein Zulaufventil 3, welches in dem gezeigten Ausführungsbeispiel als Magnetventil ausgebildet ist. Von der Urinalsteuerung 8 werden unter anderem über den wenigstens einen HF-Bewegungssensor 5 Benutzungsdaten erfasst. Basierend auf diesen Daten werden von der Urinalsteuerung 8 beispielsweise der Wasserverbrauch des Urinalsystems 10, eine Benutzungsstatistik und/oder ein zeitlicher Verlauf eines Nutzungsvorganges ermittelt. Beispielsweise werden hierfür von der Urinalsteuerung 8 Spülungen gezählt, diese mit der jeweiligen Spülmenge multipliziert und dabei gegebenenfalls Druck- und/oder Durchflusswerte hinzu gezogen.

Im Bereich der Wasserversorgung des Urinalsystems 10 werden Parameter wie der Wasserdruck und/oder der Durchfluss als Betriebsdaten der Wasserversorgung erfasst. Hierfür sind im Flüssigkeitszulauf 2 der wenigstens eine Drucksensor 12 und/oder der wenigstens eine Durchflusssensor angeordnet.

Die von der Urinalsteuerung 8 erfassten Benutzungsdaten sowie die Betriebsdaten der Wasserversorgung werden an das Datenverarbeitungssystem 9 übermittelt und zur rechentechnischen Auswertung verwendet. Die rechentechnische Auswertung erfolgt über Kl-Algorithmen und/oder Modellbildung.

In dem Datenverarbeitungssystem 9 erfolgt eine Analyse von Druck und Durchfluss. Es kommt zu einer Erkennung von Über- oder Unterdruck, einer Erkennung von Druckschwankungen, Druckspitzen und anderen Problemen der Wasserversorgung und einer Erkennung von Trends. Weiterhin wird durch das Datenverarbeitungssystem 9 ein Zusammenhang mit den Benutzungsdaten des Urinalsystems 10 hergestellt.

Bei kritischen Druckverhältnissen, wie beispielsweise Über- oder Unterdruck, wird eine Fehler- und/oder Servicemeldung an den/die Gebäudebetreiber, einen Installateur, eine Gebäudeleittechnik, eine Cloud und/oder den zuständigen Wasserversorger abgesetzt. Zudem kann eine Warnung oder ein Alarm ausgelöst werden.

Bei regulären Druckverhältnissen durch die Urinalsteuerung 8 erfolgt eine Spülmengenregelung an dem Urinalsystem 10. Dabei wird eine Spülzeit an dem Urinalsystem 10 an einen erfassten Wasserdruck oder einen erfassten Durchfluss angepasst, wobei Schwankungen und Trends berücksichtigt werden. Ziel ist eine korrekte, d. h. möglichst vollständige Ausspülung des Urinalsystems 10. Mit der Anpassung der Spülzeit erfolgt eine Anpassung der Betriebsparameter des Urinalsystems 10, welche wiederum an die Urinalsteuerung 8 übermittelt werden.

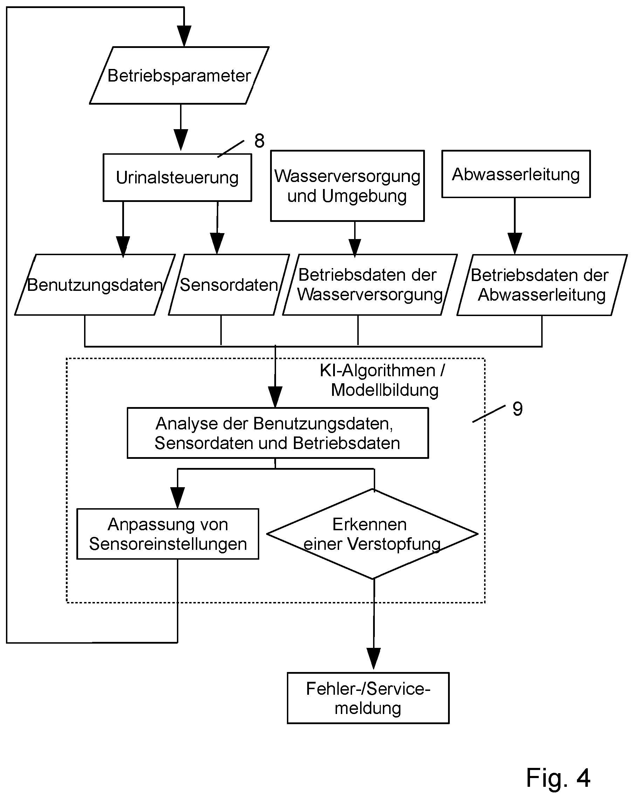

Figur 4 zeigt ein Fließschema zur Erkennung einer und Reaktion auf eine Verstopfung einer Ausführungsform eines erfindungsgemäßen Urinalsystems 10. Auch hier werden gleiche Bezugszeichen wie oben verwendet, wobei auf obige Beschreibung verwiesen wird.

Die Urinalsteuerung 8 ist mit wenigstens einem HF-Bewegungssensor 5 zur Erkennung verschiedener Parameter und mit wenigstens einem Aktor zur Auslösung einer Spülung gekoppelt. Die von dem wenigstens einem HF-Bewegungssensor 5 erkannten Parameter sind eine Urinalbenutzung, fließendes Spülwasser 6, Abflussverhalten und -geschwindigkeit sowie im Urinalbecken 1 befindliche Flüssigkeit 13 in Form von Stauwasser.

Der wenigstens eine Aktor ist hier ein Zulaufventil 3, welches in der gezeigten Ausführungsform als Magnetventil ausgebildet ist.

Von der Urinalsteuerung 8 werden Benutzungsdaten und Sensordaten erfasst. Die Benutzungsdaten beinhalten beispielsweise den Wasserverbrauch des Urinalsystems 10, eine Benutzungsstatistik oder den zeitlichen Verlauf eines Nutzungsvorganges. Die Sensordaten beinhalten einen Spülwasserfluss, die Abflussgeschwindigkeit und/oder eine Verstopfung und/oder im Urinalbecken 1 befindliche Flüssigkeit 13, wie beispielsweise Stauwasser.

Im Bereich der Wasserversorgung des Urinalsystems 10 werden Parameter wie Wasserdruck, Durchfluss, Wasserqualität und/oder Wassertemperatur als Betriebsdaten der Wasserversorgung erfasst. Hierfür sind in dem Flüssigkeitszulauf 2 wenigstens ein Drucksensor 12 und/oder wenigstens ein Durchflusssensor und/oder wenigstens ein Temperaturfühler angeordnet. Daten bezüglich der Wasserqualität beziehen sich beispielsweise auf den Kalkgehalt des Wassers.

Im Bereich einer sich an den Urinalablauf 4 anschließenden Abwasserleitung werden die Fließgeschwindigkeit und/oder eine mögliche Verstopfung als Betriebsdaten der Abwasserleitung erfasst.

Die Benutzungsdaten und Sensordaten aus der Urinalsteuerung 8, die Betriebsdaten der Wasserversorgung und die Betriebsdaten der Abwasserleitung werden anschließend mit Hilfe von Kl-Algorithmen analysiert. Dabei erfolgt eine Analyse des Abflussverhaltens, eine Trendanalyse zur Erkennung von Änderungen, die Erkennung von bestehenden und beginnenden Verstopfungen, die Erkennung einer nachlassenden Abflussleistung, und/oder die Erkennung von Servicebedarf.

Bei einer vollständigen Verstopfung des Urinalsystems 10 kommt es zum Anstauen von Flüssigkeit in dem Urinalbecken 1, wie es schematisch in Figur 2 zu sehen ist. Wenn der in Figur 1 gezeigte Erfassungsbereich 7 des HF-Bewegungssensors 5 in dem Urinalbecken 1 mit Flüssigkeit gefüllt ist, erkennt der HF-Bewegungssensor 5 keinen Flüssigkeitsfluss mehr, weil das HF-Signal des HF-Bewegungssensors 5 typischerweise die stehende Flüssigkeit 13 nicht durchdringen kann. In dieser Situation werden keine Benutzungen erkannt und bei kompletter Verstopfung auch keine Spülungen.

Bei der vorliegenden Erfindung kann dieser Effekt rechtzeitig erkannt werden. Durch die sich allmählich erhöhende Nachlaufzeit von Flüssigkeit am Urinalsystem 10 ergibt sich mittels der durch das Datenverarbeitungssystem 9 vorgenommenen Trendanalyse die Entscheidung, dass eine beginnende Verstopfung vorliegt. Bei der Bewertung der Nachlaufzeit können Umgebungsbedingungen, wie Wasserdruck, Reinigung, gegebenenfalls Spülungen weiterer Armaturen, usw. berücksichtigt werden.

Wird eine Verstopfung, eine beginnende Verstopfung oder eine nachlassende Abflussleistung an dem Urinalsystem 10 erkannt, wird durch die Urinalsteuerung 8 und/oder das Datenverarbeitungssystem 9 eine Fehler- und/oder Servicemeldung an den/die Gebäudebetreiber, einen Installateur, eine Gebäudeleittechnik und/oder eine Cloud abgesetzt. Daraufhin sollte der Abfluss geprüft und gegebenenfalls ein Siphon des Urinalsystems 10 gewechselt werden.

Wenn weder eine Verstopfung, noch eine beginnende Verstopfung oder eine nachlassende Abflussleistung erkannt wird, kommt es gegebenenfalls zu einer Anpassung von Einstellungen an dem Urinalsystem 10, wie beispielsweise einer Anpassung der Spülzeit oder einer Anpassung des Spülintervalls. Mit der Anpassung der Spülzeit und/oder des Spülintervalls erfolgt eine Anpassung der Betriebsparameter, welche wiederum an die Urinalsteuerung übermittelt werden.

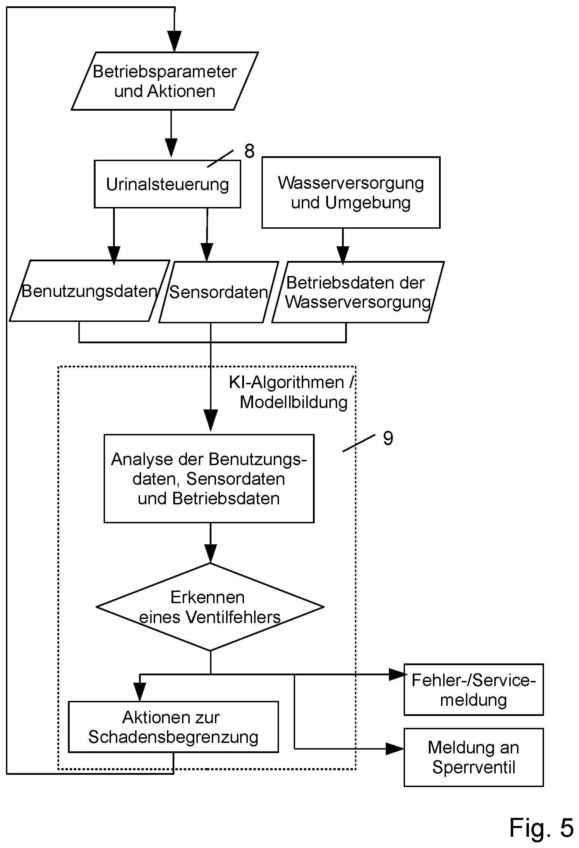

Figur 5 ist ein Fließschema zur Ventildiagnose an einem Zulaufventil 3 einer Ausführungsform eines erfindungsgemäßen Urinalsystems 10, das entsprechend oder ähnlich dem aus den Figuren 1 und 2 ausgebildet ist, auf die im Folgenden Bezug genommen wird.

In dem in Figur 5 veranschaulichten, an dem Urinalsystem 10 ausgeführten Verfahren werden kontinuierlich oder in vorgegebenen Zeitintervallen Betriebsparameter durch die Urinalsteuerung 8 des Urinalsystems 10 erfasst und/oder gespeichert. Solche Betriebsparameter können beispielsweise auch von der Urinalsteuerung 8 selbst initiierte Betriebsparameter, wie eine Spülzeit an einem oder mehreren Urinalen des Urinalsystems 10 und/oder an dem Urinalsystem 10 durchgeführte Aktionen, wie das Öffnen und/oder Schließen wenigstens eines Zulaufventils 3 des Urinalsystems 10 sein.

Die Urinalsteuerung 8 ist mit wenigstens einem an dem Urinalbecken 1 und/oder dem Urinalablauf 4 angeordneten HF-Bewegungssensor 5 gekoppelt. Dabei kann die Urinalsteuerung 8 auch mit dem wenigstens einen HF-Bewegungssensor 5 eine bauliche Einheit bilden.

Durch den wenigstens einen HF-Bewegungssensor 5 wird zusammen mit der Urinalsteuerung 8 beispielsweise eine Urinalbenutzung und/oder fließendes Spülwasser 6 und/oder ein Abflussverhalten an einem Urinal und/oder eine Abflussgeschwindigkeit an dem Urinal und/oder Flüssigkeit 13, wie beispielsweise Stauwasser, in dem Urinalbecken 1 erfasst.

Ferner werden, wie oben bereits erwähnt, durch die Urinalsteuerung 8, die zudem mit wenigstens einem in dem Flüssigkeitszulauf 2 vorgesehenen Zulaufventil 3 gekoppelt ist und dieses ansteuern kann, an dem Zulaufventil 3 ausgeführte Aktionen, wie ein Auslösen einer Spülung und deren Dauer, erfasst und/oder gespeichert.

Die von der Urinalsteuerung 8 erfassten und/oder gespeicherten Daten können in Benutzungsdaten und Sensordaten untergliedert werden.

Die Benutzungsdaten können Daten zum Wasserverbrauch des Urinalsystems 10 und/oder zur Benutzungsstatistik des Urinalsystems 10 und/oder zum zeitlichen Verlauf von Benutzungen des Urinalsystems 10 beinhalten.

Die Sensordaten können Daten zum Spülwasserfluss an dem Urinalsystem 10 und/oder zur Abflussgeschwindigkeit an dem Urinalsystem 10 und/oder zu einer Verstopfung an dem Urinalsystem 10 und/oder zum Vorliegen von Stauwasser in dem Urinalbecken 1 und/oder zu einem Stromverlauf an dem Zulaufventil 3 beinhalten.

Darüber hinaus werden an dem Urinalsystem 10 Betriebsdaten aus einer mit dem Urinalsystem 10 verbundenen Wasserversorgung und/oder aus einer Umgebung des Urinalsystems 10 erfasst. Solche Betriebsdaten können beispielsweise ein mit dem in der Flüssigkeitszuleitung 2 vorgesehenen Drucksensor 12 erfasster Wasserdruck und/oder ein in der Flüssigkeitszuleitung erfasster Wasserdurchfluss und/oder Daten zur Wasserqualität, wie ein Kalkgehalt, des dem Urinalsystem 10 zugeführten Wassers und/oder zur Wasserstemperatur des dem Urinalsystem 10 zugeführten Wassers sein.

Die Benutzungsdaten, die Sensordaten und die Betriebsdaten werden von dem Datenverarbeitungssystem 9 verarbeitet. Das Datenverarbeitungssystem 9 arbeitet unter Verwendung von Methoden der Künstlichen Intelligenz (KI) und auf Basis einer Modellbildung.

Dabei können in dem Datenverarbeitungssystem 9 basierend auf einer Analyse der Sensordaten, der Benutzungsdaten und der Betriebsdaten der Wasserversorgung folgende Vorgänge, jeweils einzeln oder in Kombination, ausgeführt werden:
- Analyse von Druck und/oder Durchfluss während eines Spülvorganges an dem Urinalsystem 10
- Analyse eines Wasserflusses während eines Spülvorganges an dem Urinalsystem 10
- Analyse eines Abflussverhaltens an dem Urinalsystem 10
- Trendanalyse
- Erkennung von Änderungen an dem Urinalsystem 10
- Erkennung wenigstens eines Ventilfehlers, anhand eines nicht erfolgenden Öffnens oder eines nicht erfolgenden Schließens, an dem Zulaufventil 3
- Erkennung von zu geringem Durchfluss an dem Urinalsystem 10
- Analyse eines Stromverbrauchs an dem Zulaufventil 3 zur Erkennung elektrischer Ventilfehler und/oder um Rückschlüsse auf einen Wasserfluss in dem Zulaufventil 3 zu ziehen.

Ergibt sich durch wenigstens einen dieser Vorgänge eine Erkennung eines Ventilfehlers an dem Zulaufventil 3, wird durch das Datenverarbeitungssystem 9 wenigstens ein Schritt zur Schadensbegrenzung ausgelöst.

Ein solcher Schritt kann beispielsweise ein Auslösen eines wiederholten Ventilschließvorganges an dem Zulaufventil 3 und/oder eine Verhinderung eines weiteren Öffnens des Zulaufventils 3 beispielsweise bis zu einem nächsten Servicetermin und/oder eine Anpassung einer Spülzeit des Urinalsystems 10 an einen erfassten Durchfluss von Flüssigkeit durch die Flüssigkeitszuleitung 2 sein. Der oder die vorgenommenen Schritte zur Schadensbegrenzung werden als Kontrolldaten in die eingangs erwähnten Betriebsparameter des Urinalsystems 10 aufgenommen, durch die Urinalsteuerung 8 gespeichert und in weitere Analysen durch das Datenverarbeitungssystem 9 einbezogen.

Zusätzlich oder alternativ dazu kann durch das Datenverarbeitungssystem 9 wenigstens eine Meldung an einen Gerätebetreiber, einen Installateur, eine Gebäudeleittechnik und/oder eine Cloud erfolgen. Diese Meldung kann Angaben und/oder Daten zu einem Vorliegen einer Verstopfung und/oder einer sonstigen Störung an dem Urinalsystem 10 beinhalten. Die Meldung kann auch bereits konkrete Anweisungen, wie Anweisungen zur Beseitigung der Verstopfung und/oder zur Abflussprüfung und/oder zum Wechseln eines Siphons an dem Urinalsystem 10 beinhalten.

Ferner wird durch das Datenverarbeitungssystem 9 vorzugsweise ein Signal an ein Hauptsperrventil übertragen, auf dessen Grundlage die Wasserzufuhr zu dem Urinalsystem 10 gesperrt wird, wenn das Zulaufventil 3 nicht schließt.

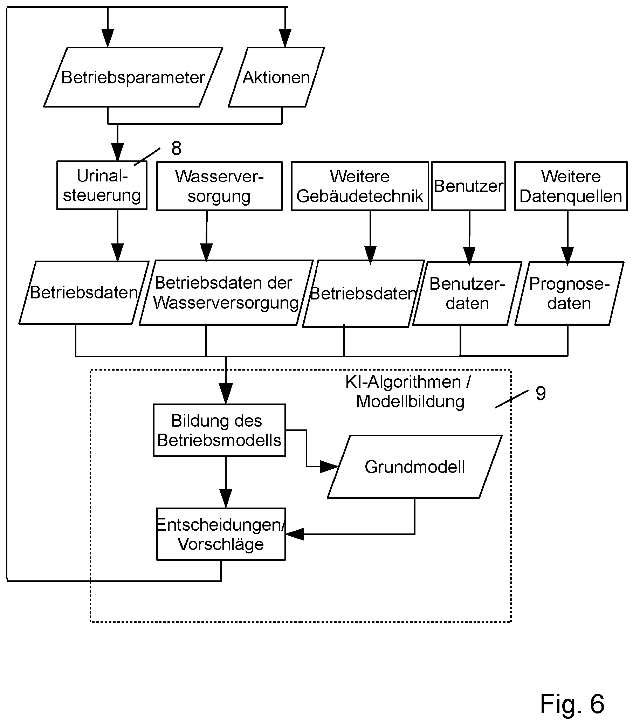

Figur 6 zeigt ein Fließschema von Abläufen an einer Ausführungsform eines erfindungsgemäßen Urinalsystems 10, die zum Wassersparen genutzt werden können. Als Urinalsystem 10 kann wiederum beispielsweise das in den Figuren 1 und 2 gezeigte Urinalsystem 10, auf das im Folgenden Bezug genommen wird, oder ein ähnliches Urinalsystem verwendet werden.

In dem in Figur 6 dargestellten, an dem Urinalsystem 10 ausgeführten Verfahren werden durch eine Urinalsteuerung 8 kontinuierlich oder in vorgegebenen Zeitintervallen Betriebsparameter des Urinalsystems 10 erfasst und/oder gespeichert. Solche Betriebsparameter können beispielsweise eine Spülmenge an einem oder mehreren Urinalen des Urinalsystems 10 und/oder eine Empfindlichkeit wenigstens eines an dem Urinalsystem 10 verwendeten Sensors und/oder eine Maximallaufzeit des Urinalsystems 10 und/oder ein Durchfluss durch das Urinalsystem 10 und/oder ein Hybridmodus des Urinalsystems 10 und/oder ein an dem Urinalsystem 10 eingestelltes Wassersparprogramm und/oder an dem Urinalsystem 10 durchgeführte Aktionen, wie das Öffnen und/oder Schließen wenigstens eines Zulaufventils 3 des Urinalsystems 10 und/oder eine Reinigungssperre und/oder ein Abschalten einer Wasserversorgung des Urinalsystems 10 und/oder eine Durchführung einer thermischen Desinfektion an dem Urinalsystem 10 und/oder eine Aktivierung einer Beleuchtung an dem Urinalsystem 10 und/oder andere produktspezifische Aktionen an dem Urinalsystem 10 sein.

Die erfassten und/oder gespeicherten Betriebsparameter und Aktionen werden in einem Datenverarbeitungssystem 9 verarbeitet.

Die Urinalsteuerung 8 ist mit dem wenigstens einen HF-Bewegungssensor 5 zur Erkennung von Benutzungen des Urinalsystems 10 und dem Zulaufventil 3 zur Spülauslösung, das beispielsweise ein Magnetventil sein kann, gekoppelt.

Die Urinalsteuerung 8 ist in dem gezeigten Ausführungsbeispiel, anders als in den Figu-ren 1 und 2, mit dem separat von der Urinalsteuerung 8 ausgebildeten Datenverarbeitungssystem 9 verbunden, das in anderen Ausführungsformen der Erfindung, wie in Figur 1 und 2 zu sehen, auch Bestandteil der Urinalsteuerung 8 sein kann.

Von der Urinalsteuerung 8 werden in dem in Figur 6 gezeigten Ausführungsbeispiel Betriebsdaten, die beispielsweise Daten zu einem Wasserverbrauch des Urinalsystems 10, Durchflussdaten, Daten zum Wasserdruck an dem Urinalsystem 10, Daten zu einem zeitlichen Verlauf von Wasserverbrauch, Durchfluss und/oder Wasserdruck an dem Urinalsystem 10 und/oder zur Benutzerfrequenz des Urinalsystems 10 beinhalten können, an das Datenverarbeitungssystem 9 übermittelt.

In dem Beispiel von Figur 6 werden
- Betriebsdaten aus einer Wasserversorgung des Urinalsystems 10, die Daten zu einem Wasserdruck, einem Durchfluss und/oder deren jeweiligen zeitlichen Verlaufs beinhalten können, und/oder
- Betriebsdaten einer weiteren Gebäudetechnik, wie einer Lichtsteuerung und/oder einer Türsteuerung, die beispielsweise Zugangsdaten von Türsteuerungen und/oder Daten von Bewegungs- oder Präsenzmeldern der Lichtsteuerung beinhalten können, und/oder
- Benutzerdaten von das Urinalsystem 10 und/oder das Gebäude, in dem sich das Urinalsystem 10 befindet, nutzenden Benutzern, wie z. B. Daten zu Anwesenheit, zu Alter, zu Geschlecht, zu Stimmung und/oder zu Benutzerfeedback von Benutzern, und/oder
- Daten weiterer Datenquellen, wie z. B. wenigstens eines Fahrplans, wenigstens eines Flugplans, wenigstens eines Reinigungsplans, wenigstens eines Spielplans, Öffnungszeiten und/oder Daten wenigstens einer Wettervorhersage, aus welchen Prognosedaten erstellt werden
zusätzlich zu den Betriebsdaten aus der Urinalsteuerung 8 an das Datenverarbeitungssystem 9 übermittelt.

Das Datenverarbeitungssystem 9 nutzt zur Weiterverarbeitung der übermittelten Daten Algorithmen der Künstlichen Intelligenz sowie wenigstens eine Modellbildung.

In dem in Figur 6 dargestellten Ausführungsbeispiel erstellt das Datenverarbeitungssystem 9 ein Betriebsmodell, indem es eine Korrelation zwischen den aus den unterschiedlichen Quellen übermittelten Betriebsdaten herstellt, Wechselwirkungen zwischen verschiedenen Elementen, wie z. B. zwischen der Wasserversorgung und Wasserverbrauchern eines Wasserverbrauchersystems, in welches das Urinalsystem 10 integriert ist, herstellt und Nutzungsszenarien erkennt und prognostiziert.

Solche Nutzungsszenarien können beispielsweise durch das Datenverarbeitungssystem 9 in einen Normalbetrieb mit gelegentlicher Nutzung des Urinalsystems 10, eine vorübergehend hohe Frequentierung des Urinalsystems 10, wie beispielsweise in einer Pause in einem Theater, eine Ruhezeit, in der keine Nutzung des Urinalsystems 10 vorliegt, in einen Reinigungs- oder Servicebetrieb oder in andere anwendungsspezifische Szenarien eingeteilt werden.

Vorzugsweise ist in dem Datenverarbeitungssystem 9 bereits ein Grundmodell der Installation zur Beschreibung der Wasserversorgung, der Wasserverbraucher der Wasserverbrauchersystems, der weiteren Gebäudetechnik, des Einflusses der Prognosedaten, der Benutzer sowie der Wechselwirkungen zwischen diesen Elementen enthalten. Dieses Modell kann vorzugsweise durch das Datenverarbeitungssystem 9 kontinuierlich oder schrittweise weiterentwickelt und dadurch verbessert werden.

Aus dem Betriebsmodell und dem Grundmodell werden vorzugsweise durch das Datenverarbeitungssystem 9 Entscheidungen und/oder Vorschläge erstellt, die beispielsweise eine Vorhersage von Nutzungssituationen und/oder eine Optimierung der Betriebsparameter, wie eine Optimierung des Verbrauchs von Wasser und/oder anderer Verbrauchsmedien des Urinalsystems 10 oder des Wasserverbrauchersystems, eine Optimierung des Nutzererlebnisses von Benutzern des Urinalsystems 10 oder des Wasserverbrauchersystems und/oder eine Serviceoptimierung an dem Urinalsystem 10 oder dem Wasserverbrauchersystem und/oder eine Auslösung von Aktionen an dem Urinalsystem 10 oder dem Wasserverbrauchersystem und/oder eine Ausgabe wenigstens einer Information an Benutzer und/oder eine Gebäudeverwaltung und/oder eine Installateur betreffen oder beinhalten.

Die Entscheidungen und/oder Vorschläge werden als Kontrolldaten in die eingangs erwähnten Betriebsparameter des Urinalsystems 10 aufgenommen, durch die Urinalsteuerung 8 gespeichert und in weitere Analysen durch das Datenverarbeitungssystem 9 einbezogen.

Die oben erläuterten Ausführungsbeispiele können auch miteinander kombiniert werden.

Bei der vorliegenden Erfindung können auch Fehler an dem wenigstens einen HF-Bewegungssensor 5 erkannt werden. Teilweise können unterschiedliche Fehler an dem HF-Bewegungssensor 5 zu gleichen oder ähnlichen Effekten führen. Wenn beispielsweise der HF-Bewegungssensor 5 während einer Spülung kein fließendes Spülwasser erkennt, kann das folgende Ursachen haben:
- vollständige Verstopfung, wodurch der HF-Bewegungssensor 5 keine Bewegung erkennt, da er "blind" ist,
- Defekt des Zulaufventils 3 oder Elektronikdefekt, wodurch sich das Zulaufventil 3 nicht öffnet,
- Fehler in der Wasserversorgung bzw. keine Wasserzufuhr zum Urinal.

Eine Unterscheidung dieser Situationen kann in dem Datenverarbeitungssystem 9 durch Kombination der Signale des HF-Bewegungssensors 5 mit einer oder mehreren der folgenden weiteren Informationen erfolgen:
- wenigstens ein Drucksensor 12 in der Flüssigkeitszuleitung 2 erkennt, ob die Wasserversorgung intakt ist,
- wenigstens ein Durchflusssensor in oder an der Flüssigkeitszuleitung 2 erkennt unabhängig von dem wenigstens einen HF-Bewegungssensor 5, ob Wasser fließt,
- Information von weiteren Sensoren, ob andere Sensoren einen Fehler in der Wasserversorgung festgestellt haben,
- Plausibilität / Erlernen typischer Signalverläufe (z. B. ist eine vollständige Verstopfung direkt nach Erkennung einer Benutzung unwahrscheinlich)
- sensorische Erkennung einer vollständigen Verstopfung.

Die entsprechenden Situationen können in dem Datenverarbeitungssystem 9 anhand typischer Signalverläufe im Zusammenhang mit Daten weiterer Sensoren mit Hilfe eines Klassifikators und unter Verwendung von Methoden der Künstlichen Intelligenz erkannt und voneinander unterschieden werden.

Durch Kombination der Daten aus verschiedenen Quellen und Methoden der Künstlichen Intelligenz werden erfindungsgemäß Funktionen ermöglicht, die mit einem herkömmlichen Sensor nicht bzw. nur durch menschliche Entscheidungen und menschlichen Eingriff möglich sind.

So ergeben sich durch die vorliegende Erfindung beispielsweise folgende Anwendungen: Beispielsweise ist a) eine Spülmengenregelung und/oder eine Druckwarnung wie folgt möglich:
Die Spülung eines Urinalsystems 10 erfolgt durch Öffnung eines Zulaufventils 3 für eine definierte Zeit. Die Spülzeit ist in der Regel so eingestellt, dass bei einem definierten Wasserdruck (Nenndruck, i.d.R. 3 bar) eine gewünschte Wassermenge (Spülmenge) in das Urinalbecken 1 fließt. Die tatsächliche Spülmenge hängt vom tatsächlichen Wasserdruck ab und kann deutlich von der gewünschten Spülmenge abweichen.

Eine zu geringe Spülmenge kann durch unzureichende Ausspülung des Siphons des Urinalsystems 10 zu einer verstärkten Urinsteinbildung oder Bakterienwachstum im Siphon oder im Abflussrohr und in der Folge zu einer Verstopfung führen. Eine zu hohe Spülmenge erhöht unnötig den Wasserverbrauch.

Bei geringem Wasserdruck kann unter Umständen auch durch Verlängerung der Spülzeit keine ausreichende Ausspülung des Siphons erreicht werden. Das kann in Folge zu einer schnellen Verstopfung führen.

Durch Vernetzung des Urinalspülsystems, beispielsweise über ein drahtloses oder vermaschtes Datenübertragungsnetzwerk, wie Bluetooth oder Bluetooth mesh, mit dem Drucksensor 12 oder einem Durchflusssensor oder durch direkte Integration des Drucksensors 12 oder eines Durchflusssensors in das Urinalspülsystem des Urinalsystems 10 kann die Spülzeit in Abhängigkeit vom tatsächlichen Wasserdruck oder Durchfluss angepasst und damit die Spülmenge deutlich genauer eingestellt werden (Spülmengenregelung).

Bei Unterschreitung eines bestimmten Mindest-Wasserdrucks oder -Durchflusses für eine bestimmte Zeit kann eine Diagnose-Meldung ausgelöst werden, um eine verantwortliche Person über das erhöhte Verstopfungsrisiko zu informieren und entsprechende Maßnahmen einzuleiten.

Ferner kann b) eine Verstopfung oder Verstopfungsgefahr wie folgt erkannt und gemeldet werden:
Im Fall einer vollständigen oder teilweisen Verstopfung des Urinalablaufs 4 staut sich Flüssigkeit im Urinalbecken. Der wenigstens eine HF-Bewegungssensor 5 erkennt in dieser Situation keine Benutzungen und die Urinalsteuerung 8 initiiert auch keine Spülungen, bis die Verstopfung behoben ist. Diese Situation wird in der Regel erst bei vollständiger Verstopfung durch Nutzer oder Reinigungskräfte erkannt und führt dann zu Reklamationen und/oder Serviceeinsätzen.

Der wenigstens eine HF-Bewegungssensor 5 bewirkt in Kombination mit der Urinalsteuerung 8 und dem damit verbundenen Datenverarbeitungssystem 9 eine Auswertung des Fließ- und Ablaufverhaltens an dem Urinalsystem 10 während und nach einer Spülung. Dadurch wird bei Erkennen von "keinem Abfluss" erkannt, dass eine vollständige Verstopfung vorliegen kann, und bei Erkennen von "verändertem Abflussverhalten" erkannt, dass eine beginnende Verstopfung vorliegen kann. Durch eine in dem Datenverarbeitungssystem 9 vorgenommene Trendanalyse, die über einen längeren Zeitraum vorgenommen wird, kann somit eine beginnende Verstopfung rechtzeitig prognostiziert werden.

Eine vollständige Verstopfung eines oder mehrere Urinale des Urinalsystems 10 kann auch sensorisch durch Auswertung von Sensorsignalen des wenigstens einen HF-Bewegungssensors 5 oder eines anderen Sensors, wie oben unter Punkt a) erläutert, erkannt werden.

Zur Einschätzung des Verstopfungsrisikos können durch das Datenverarbeitungssystem 9, falls verfügbar, noch weitere Daten hinzugezogen werden, wie z. B. die Wasserqualität, wie der Kalkgehalt im Wasser, die Fließgeschwindigkeit im Abwasserleitungsnetz, Informationen über Gefälle von Abwasserrohren oder auch die jeweilige Temperatur. All diese Faktoren können beispielsweise die Urinsteinbildung und das Bakterienwachstum und damit das Verstopfungsrisiko beeinflussen.

Bei Erkennung einer vollständigen oder einer teilweisen Verstopfung kann mittels des Datenverarbeitungssystems 9 die Ausgabe einer Diagnosemeldung erfolgen.

Zudem ist es c) möglich, wie folgt eine erweiterte Ventildiagnose an dem Urinalsystem 10 vorzunehmen:
Zur Spülung in Urinalen und in anderen Elektronikprodukten im Wasserbereich werden Zulaufventile 3 in Form von Magnetventilen zur Steuerung des Wasserflusses eingesetzt. Magnetventile sind als elektronische Komponenten bedingt durch ihre begrenzte Lebensdauer beispielsweise durch Verschmutzung immer eine Schwachstelle im System. Defekte Magnetventile können zum Funktionsausfall des Urinalsystems 10 führen, indem keine Spülung ausgeführt wird, oder auch zum Dauerlauf des Urinalsystems 10 führen, indem sie keine Schließfunktion ausüben.

Die vorliegende Erfindung ermöglicht dagegen eine Ventildiagnose an dem Zulaufventil 3.

Der wenigstens eine HF-Bewegungssensor 5 kann im Fall einer Spülung die fließende und abfließende Flüssigkeit erkennen. Damit kann mit dem erfindungsgemäßen Urinalsystem 10 erkannt werden, ob bei einer Spülung Wasser fließt und ob nach der Spülung der Wasserfluss wieder gestoppt wird. Durch Kombination mit Daten anderer vernetzter Sensoren, wie Drucksensor(en) 12 und/oder Durchflusssensor(en) in der Flüssigkeitszuleitung 2 und/oder eine Detektion des Fließverhaltens im Abfluss des Urinalsystems 10, kann bei Ausführungsformen der vorliegenden Erfindung ein Ventildefekt von Situationen wie einer Benutzung direkt nach einer Spülung, einer Reinigung, einer abgesperrten Wasserversorgung u. a. unterschieden werden. Dazu können Regeln und Methoden der Künstlichen Intelligenz, wie beispielsweise ein Erlernen typischer Benutzungssituationen, durch das Datenverarbeitungssystem 9 verwendet werden.

Im Fall eines erkannten Ventilfehlers kann durch das Datenverarbeitungssystem 9 eine Diagnosemeldung ausgelöst werden. Falls der Fehler zu einem dauerhaften Wasserfluss führt, kann im Zusammenspiel mit einem Hauptsperrventil beispielsweise über ein drahtloses oder vermaschtes Datenübertragungsnetzwerk 14, wie Bluetooth oder Bluetooth mesh, die Wasserversorgung des betroffenen Bereiches, z. B. Raumes, abgesperrt werden.

Schließlich eröffnet d) die vorliegende Erfindung die Möglichkeit einer wie folgt ablaufenden Nutzungsprofil-Analyse und/oder die Anwendung der wie folgt beschriebenen Wasserspar-Algorithmen:
Eine Standardfunktion von Urinalsensoren im Stand der Technik ist eine Spülung nach jeder Benutzung des Urinals. Für Installationen mit hoher Benutzerfrequenz, wie in öffentlichen Gebäuden, Stadien usw., können bei bekannten Sanitärprodukten Wassersparprogramme implementiert werden, die in bestimmten Betriebssituationen die Anzahl der Spülungen reduzieren. Die starren Regelungen dieser Betriebsarten führen dazu, dass diese Programme in vielen Installationen nicht zur Wirkung kommen, da beispielsweise die Kriterien eines Stadionmodus trotz hoher Nutzerfrequenz nicht erfüllt sind, oder der Bedienkomfort unnötig eingeschränkt ist, sodass beispielsweise trotz geringer Nutzerfrequenz weniger Spülungen ausgeführt werden.

Bei der vorliegenden Erfindung erfolgt jedoch eine Analyse des tatsächlichen Benutzungsprofils eines Urinalsystems 10. Dabei werden über einen längeren Zeitraum typische Nutzungsszenarien an dem Urinalsystem 10 erkannt, Zeiten hoher Frequentierung des Urinalsystems 10 identifiziert und für die jeweilige Situation geeignete und wirksame Wassersparprogramme aktiviert.

Die Analyse der Benutzungsprofile kann neben den Betriebsdaten des wenigstens einen HF-Bewegungssensors 5 noch weitere Daten anderer Produkte, z. B. Daten anderer Sanitärprodukte des Raumes, welche ein Maß für die Frequentierung des Raumes angeben, Pläne/Öffnungszeiten eines Gebäudes, Spielpläne eines Theaters und/oder Flugpläne eines Flughafens usw., einbeziehen, um Zeiten hoher Frequentierung vorherzusagen und für die jeweilige Situation zugeschnittene Wassersparprogramme zu aktivieren. So kann ein Spülintervall und die Spülmenge an eine zu erwartende Nutzerzahl angepasst und zu geeigneten Zeiten eine Reinigungsspülung mit hoher Spülmenge ausgelöst werden.

Ein Eingriff des jeweiligen Benutzers oder Gebäudebetreibers ist zwar grundsätzlich möglich, aber für die Funktion der vorliegenden Erfindung nicht erforderlich.

Mit Hilfe der vorliegenden Erfindung ist es weiterhin möglich, Reinigungszyklen des Urinalsystems 10 zu optimieren. Beispielsweise können vor einer erwarteten Frequentierung Verbrauchsmaterialien wie Seife oder Handtücher aufgefüllt und nach einer Frequentierung eine Reinigung durchgeführt werden.

## Patentansprüche

1. Verfahren zum Betreiben eines Urinalsystems (10) mit einem Urinalbecken (1), einem Flüssigkeitszulauf (2) mit einem Zulaufventil (3), einem Urinalablauf (4), wenigstens einem an dem Urinalbecken (1) und/oder dem Urinalablauf (4) vorgesehenen HF-Bewegungssensor (5) und einer mit dem wenigstens einen HF-Bewegungssensor (5) und dem Zulaufventil (3) gekoppelten Urinalsteuerung (8), durch die das Zulaufventil (3) für eine vorbestimmte Zeit geöffnet wird, wenn durch den wenigstens einen HF-Bewegungssensor (5) ablaufende Flüssigkeit detektiert wird, wobei in dem Flüssigkeitszulauf (2) mit wenigstens einem Drucksensor (12) ein Flüssigkeitsdruck oder mit wenigstens einem Durchflusssensor ein Flüssigkeitsdurchfluss erfasst wird/werden, und die Urinalsteuerung (8) ein Datenverarbeitungssystem (9) aufweist oder mit einem Datenverarbeitungssystem (9) verbunden ist, das wenigstens von dem wenigstens einen HF-Bewegungssensor (5) und dem wenigstens einen Drucksensor (12) oder dem wenigstens einen Durchflusssensor erfasste Daten abfragt und empfängt, rechentechnisch auswertet und auf Basis der ausgewerteten Daten erkennt, wenn wenigstens einer der folgenden Fehler vorliegt, und wenigstens eine Aktion auslöst, um wenigstens einen der folgenden Fehler zu vermeiden:
- dass der Urinalablauf (4) verstopft ist oder
- dass eine Druckschwankung in einem mit dem Urinalsystem (10) verbundenen Abwassersystem vorliegt oder
- dass eine Unterschreitung eines Druckmindestwertes oder eine Überschreitung eines Druckmaximalwertes in dem Flüssigkeitszulauf (2) vorliegt oder
- dass der Flüssigkeitszulauf (2) und/oder das Zulaufventil (3) defekt ist oder
- dass ein Ausfall wenigstens eines des wenigstens einen HF-Bewegungssensors (5) vorliegt.

2. Verfahren nach Anspruch 1, **dadurch gekennzeichnet, dass** das Datenverarbeitungssystem (9) erkennt, dass der Urinalablauf (4) teilweise verstopft ist oder der Flüssigkeitszulauf (2) defekt ist, wenn trotz geöffnetem Zulaufventil (3) durch den wenigstens einen HF-Bewegungssensor (5) detektiert wird, dass Flüssigkeit aus dem Urinalbecken (1) zeitverzögert abläuft.

3. Verfahren nach Anspruch 2, **dadurch gekennzeichnet, dass** das Datenverarbeitungssystem (9) erkennt, ob der Urinalablauf (4) teilweise verstopft ist oder der Flüssigkeitszulauf (2) defekt ist, wenn trotz geöffnetem Zulaufventil (3) und durch den wenigstens einen Drucksensor (12) erfasstem Flüssigkeitsdruck oder durch den wenigstens einen Durchflusssensor erfasstem Flüssigkeitsdurchfluss durch den wenigstens einen HF-Bewegungssensor (5) detektiert wird, dass Flüssigkeit aus dem Urinalbecken (1) zeitverzögert abläuft.

4. Verfahren nach einem der Ansprüche 1 bis 3, **dadurch gekennzeichnet, dass** durch die Urinalsteuerung (8) die jeweilige Öffnungszeit des Zulaufventils (3) an den jeweiligen Flüssigkeitsdruck oder den jeweiligen Flüssigkeitsdurchfluss in dem Flüssigkeitszulauf (2) angepasst wird.

5. Verfahren nach einem der Ansprüche 1 bis 4, **dadurch gekennzeichnet, dass** das Datenverarbeitungssystem (9) erkennt, dass der Flüssigkeitszulauf (2) defekt ist, wenn der wenigstens eine HF-Bewegungssensor (5) keinen Flüssigkeitsfluss oder einen permanenten Flüssigkeitsfluss oder einen unter einem Flüssigkeitsflussschwellenwert liegenden Flüssigkeitsfluss detektiert.

6. Verfahren nach einem der Ansprüche 1 bis 5, **dadurch gekennzeichnet, dass** das Urinalsystem (10) eine mit dem Datenverarbeitungssystem (9) gekoppelte Fehler- und/oder Servicemeldungsausgabeeinheit (11) aufweist und das Datenverarbeitungssystem (9) dann, wenn es wenigstens einen der Fehler erkennt, eine Servicemeldung an die Fehler- oder Servicemeldungsausgabeeinheit (11) ausgibt.

7. Verfahren nach einem der Ansprüche 1 bis 6, **dadurch gekennzeichnet, dass** das Datenverarbeitungssystem (9) erkennt, dass eine Druckschwankung in dem mit dem Urinalbecken (1) verbundenen Abwassersystem vorliegt, wenn sich aus einem Verlauf der Daten des wenigstens einen HF-Bewegungssensors (5) eine Reihe von nacheinander erfolgten Urinalfehlspülvorgängen an dem Urinalsystem (10) ergibt oder ein Signalmuster der Daten des wenigstens einen HF-Bewegungssensors (5) einer charakteristischen Schwankung des Flüssigkeitsspiegels in dem Urinalablauf (4) entspricht.

8. Verfahren nach einem der Ansprüche 1 bis 7, **dadurch gekennzeichnet, dass** dann, wenn das Datenverarbeitungssystem (9) erkennt, dass eine Druckschwankung in einem mit dem Urinalsystem (10) verbundenen Abwassersystem vorliegt, die Urinalsteuerung (8) eine Empfindlichkeit des wenigstens einen HF-Bewegungssensors (5) ändert oder dann, wenn ein Signalmuster der Daten des wenigstens einen HF-Bewegungssensors (5) einer charakteristischen Schwankung des Flüssigkeitsspiegels in dem Urinalablauf (4) entspricht, keinen Urinalspülvorgang auslöst.

9. Verfahren nach einem der Ansprüche 1 bis 8, **dadurch gekennzeichnet, dass** das Datenverarbeitungssystem (9) wenigstens einen Datenverarbeitungsblock aufweist, der maschinell lernt und/oder auf Basis eines künstlichen neuronalen Netzes arbeitet und/oder ein Expertensystem ist.

10. Verfahren nach einem der Ansprüche 1 bis 9, **dadurch gekennzeichnet, dass** das Urinalsystem (10) in ein Wasserverbrauchersystem integriert ist, das zusätzlich zu dem Urinalsystem (10) wenigstens einen weiteren Wasserverbraucher aufweist, an dem wenigstens ein weiterer Sensor vorgesehen ist, wobei das Datenverarbeitungssystem (9) mit dem wenigstens einen weiteren Sensor gekoppelt ist und die von dem wenigstens einen weiteren Sensor empfangenen Daten ebenfalls rechentechnisch auswertet, wobei wenigstens ein(e) dabei ermittelte Spülzeit oder Verstopfung in einem Ablauf oder Druckschwankung in einem Abwassersystem oder Defekt einer Zulaufvorrichtung des wenigstens einen weiteren Wasserverbrauchers in die Erkennung wenigstens eines der Fehler eingebunden werden.

11. Verfahren nach Anspruch 10, **dadurch gekennzeichnet, dass** die Wasserverbraucher und das Urinalsystem (10) miteinander über ein vermaschtes und/oder ein drahtloses lokales Datenübertragungsnetzwerk (14) miteinander kommunizieren.

12. Verfahren nach einem der Ansprüche 1 bis 11, **dadurch gekennzeichnet, dass** ein Ausfall wenigstens eines des wenigstens einen HF-Bewegungssensors (5) vorliegt, wenn das Datenverarbeitungssystem (9) von wenigstens einem des wenigstens einen HF-Bewegungssensors (5) keine Daten empfängt oder die von dem wenigstens einem des wenigstens einen HF-Bewegungssensors (5) durch das Datenverarbeitungssystem (9) empfangenen Daten nicht von dem Datenverarbeitungssystem (9) verarbeitbar sind oder wenigstens einer des wenigstens einen HF-Bewegungssensors (5) wenigstens ein Servicesignal ausgibt.

13. Urinalsystem (10) mit einem Urinalbecken (1), einem Flüssigkeitszulauf (2) mit einem Zulaufventil (3), einem Urinalablauf (4), wenigstens einem an dem Urinalbecken (1) und/oder dem Urinalablauf (4) vorgesehenen HF-Bewegungssensor (5) und einer mit dem wenigstens einen HF-Bewegungssensor (5) und dem Zulaufventil (3) gekoppelten Urinalsteuerung (8), durch die das Zulaufventil (3) für eine vorbestimmte Zeit geöffnet wird, wenn durch den wenigstens einen HF-Bewegungssensor (5) ablaufende Flüssigkeit detektiert wird, wobei das Urinalsystem (10) ferner wenigstens einen Drucksensor (12) oder wenigstens einen Durchflusssensor in dem Flüssigkeitszulauf (2) aufweist oder mit wenigstens einem Drucksensor (12) oder wenigstens einem Durchflusssensor in dem Flüssigkeitszulauf (2) über ein vermaschtes Datenübertragungsnetzwerk (14) gekoppelt ist, und die Urinalsteuerung (8) ein Datenverarbeitungssystem (9) aufweist oder mit einem Datenverarbeitungssystem (9) des Urinalsystems (10) verbunden ist, das ausgebildet ist, um wenigstens von dem wenigstens einen HF-Bewegungssensor (5) und dem wenigstens einen Drucksensor (12) oder dem wenigstens einem Durchflusssensor erfasste Daten abzufragen und zu empfangen, rechentechnisch auszuwerten und auf Basis der ausgewerteten Daten zu erkennen, ob wenigstens einer der folgenden Fehler vorliegt, und das ausgebildet ist, um wenigstens eine Aktion auszulösen, um wenigstens einen der folgenden Fehler zu vermeiden:
- dass der Urinalablauf (4) verstopft ist oder
- dass eine Druckschwankung in einem mit dem Urinalsystem (10) verbundenen Abwassersystem vorliegt oder
- dass eine Unterschreitung eines Druckmindestwertes oder eine Überschreitung eines Druckmaximalwertes in dem Flüssigkeitszulauf (2) vorliegt oder
- dass der Flüssigkeitszulauf (2) und/oder das Zulaufventil (3) defekt ist oder
- dass ein Ausfall wenigstens eines des wenigstens einen HF-Bewegungssensors (5) vorliegt.

14. Urinalsystem nach Anspruch 13, **dadurch gekennzeichnet, dass** das Urinalsystem (10) eine mit dem Datenverarbeitungssystem (9) gekoppelte Fehler- oder Servicemeldungsausgabeeinheit (11) aufweist.

15. Urinalsystem nach einem der Ansprüche 13 oder 14, **dadurch gekennzeichnet, dass** das Datenverarbeitungssystem (9) wenigstens einen maschinell lernenden und/oder ein künstliches neuronales Netz aufweisenden und/oder ein Expertensystem beinhaltenden Datenverarbeitungsblock aufweist.

16. Wasserverbrauchersystem mit einem Urinalsystem (10) nach einem der Ansprüche 13 bis 15, **dadurch gekennzeichnet, dass** das Wasserverbrauchersystem zusätzlich zu dem Urinalsystem (10) wenigstens einen weiteren Wasserverbraucher aufweist, an dem wenigstens ein weiterer Sensor vorgesehen ist, wobei das Datenverarbeitungssystem (9) mit dem wenigstens einen weiteren Sensor gekoppelt ist und ausgebildet ist, die von dem wenigstens einen weiteren Sensor erfassten und durch das Datenverarbeitungssystem (9) empfangenen Daten ebenfalls rechentechnisch auszuwerten und in die Fehlererkennung oder -vermeidung einzubeziehen.

17. Wasserverbrauchersystem nach Anspruch 16, **dadurch gekennzeichnet, dass** die Wasserverbraucher und das Urinalsystem (10) über ein vermaschtes und/oder ein drahtloses lokales Datenübertragungsnetzwerk (14) miteinander verbunden sind.

## Claims

1. Method for operating a urinal system (10) with a urinal bowl (1), a liquid inlet (2) with an inlet valve (3), a urinal outlet (4), at least one HF motion sensor (5) provided on the urinal bowl (1) and/or the urinal outlet (4), and a urinal control (8) coupled to the at least one HF motion sensor (5) and the inlet valve (3), by means of which urinal control (8) the inlet valve (3) is opened for a predetermined time when draining liquid is detected by the at least one HF motion sensor (5), wherein a liquid pressure is detected with at least one pressure sensor (12) or a liquid flow is detected with at least one flow sensor in the liquid inlet (2), and the urinal control (8) comprises a data processing system (9) or is connected to a data processing system (9) which queries and receives data detected at least by the at least one HF motion sensor (5) and the at least one pressure sensor (12) or the at least one flow sensor, evaluates them computationally and, on the basis of the evaluated data, recognizes when at least one of the following errors is present and triggers at least one action to avoid at least one of the following errors:
- that the urinal outlet (4) is blocked or
- that there is a pressure variation in a wastewater system connected to the urinal system (10) or
- that there is a falling below of a minimum pressure value or an exceedence of a maximum pressure value in the liquid inlet (2) or
- that the liquid inlet (2) and/or the inlet valve (3) is defective or
- that there is a failure of at least one of the at least one HF motion sensor (5).

2. Method according to claim 1, **characterized in that** the data processing system (9) recognizes that the urinal outlet (4) is partially blocked or the liquid inlet (2) is defective if, despite the inlet valve (3) being open, it is detected by the at least one HF motion sensor (5) that liquid is draining from the urinal bowl (1) with a time delay.

3. Method according to claim 2, **characterized in that** the data processing system (9) recognizes whether the urinal outlet (4) is partially blocked or the liquid inlet (2) is defective if, despite the inlet valve (3) being open and the liquid pressure detected by the at least one pressure sensor (12) or the liquid flow detected by the at least one flow sensor, the at least one HF motion sensor (5) detects that liquid is draining from the urinal bowl (1) with a time delay.

4. Method according to one of claims 1 to 3, **characterized in that** the urinal control (8) adapts the respective opening time of the inlet valve (3) to the respective liquid pressure or the respective liquid flow in the liquid inlet (2).

5. Method according to one of claims 1 to 4, **characterized in that** the data processing system (9) recognizes that the liquid inlet (2) is defective if the at least one HF motion sensor (5) detects no liquid flow or a permanent liquid flow or a liquid flow below a liquid flow threshold value.

6. Method according to one of claims 1 to 5, **characterized in that** the urinal system (10) comprises an error and/or service message output unit (11) coupled to the data processing system (9), and the data processing system (9) outputs a service message to the error and/or service message output unit (11) when it recognizes at least one of the errors.

7. Method according to one of claims 1 to 6, **characterized in that** the data processing system (9) recognizes that a pressure variation is present in the wastewater system connected to the urinal bowl (1) if a course of the data of the at least one HF motion sensor (5) results in a series of consecutive incorrect urinal flushing processes at the urinal system (10) or a signal pattern of the data of the at least one HF motion sensor (5) corresponds to a characteristic variation of the liquid level in the urinal outlet (4).

8. Method according to one of claims 1 to 7, **characterized in that** when the data processing system (9) recognizes that a pressure variation is present in a wastewater system connected to the urinal system (10), the urinal control (8) changes a sensitivity of the at least one HF motion sensor (5) or when a signal pattern of the data of the at least one HF motion sensor (5) corresponds to a characteristic variation in the liquid level in the urinal outlet (4), does not trigger a urinal flushing process.

9. Method according to one of claims 1 to 8, **characterized in that** the data processing system (9) comprises at least one data processing block which is machine learning and/or operates on the basis of an artificial neural network and/or is an expert system.

10. Method according to one of claims 1 to 9, **characterized in that** the urinal system (10) is integrated into a water consumer system which, in addition to the urinal system (10), comprises at least one further water consumer at which at least one further sensor is provided, wherein the data processing system (9) is coupled to the at least one further sensor and likewise evaluates the data received from the at least one further sensor computationally, wherein at least one detected flushing time or blockage in an outlet or pressure variation in a wastewater system or defect in an inlet device of the at least one further water consumer is incorporated into the recognition of at least one of the errors.

11. Method according to claim 10, **characterized in that** the water consumers and the urinal system (10) communicate with each other via a meshed and/or a wireless local data transmission network (14).

12. Method according to one of claims 1 to 11, **characterized in that** a failure of at least one of the at least one HF motion sensor (5) occurs when the data processing system (9) does not receive any data from at least one of the at least one HF motion sensor (5) or the data received from the at least one of the at least one HF motion sensor (5) by the data processing system (9) cannot be processed by the data processing system (9) or at least one of the at least one HF motion sensor (5) outputs at least one service signal.

13. Urinal system (10) with a urinal bowl (1), a liquid inlet (2) with an inlet valve (3), a urinal outlet (4), at least one HF motion sensor (5) provided on the urinal bowl (1) and/or the urinal outlet (4), and a urinal control (8) coupled to the at least one HF motion sensor (5) and the inlet valve (3), by means of which urinal control (8) the inlet valve (3) is opened for a predetermined time when draining liquid is detected by the at least one HF motion sensor (5), wherein the urinal system (10) further comprises at least one pressure sensor (12) or at least one liquid flow sensor in the liquid inlet (2) or is coupled to at least one pressure sensor (12) or at least one liquid flow sensor in the liquid inlet (2) via a meshed data transmission network (14), and the urinal control (8) comprises a data processing system (9) or is connected to a data processing system (9) of the urinal system (10) designed to query and receive data detected at least by the at least one HF motion sensor (5) and the at least one pressure sensor (12) or the at least one flow sensor, to evaluate said data computationally, and, on the basis of the evaluated data, to recognize at least one of the following errors, and is designed to trigger at least one action in order to avoid at least one of the following errors:
- that the urinal outlet (4) is blocked or
- that there is a pressure variation in a wastewater system connected to the urinal system (10) or
- that there is a falling below of a minimum pressure value or an exceedence of a maximum pressure value in the liquid inlet (2) or
- that the liquid inlet (2) and/or the inlet valve (3) is defective or
- that there is a failure of at least one of the at least one HF motion sensor (5).

14. Urinal system according to claim 13, **characterized in that** the urinal system (10) comprises an error and/or service message output unit (11) coupled to the data processing system (9).

15. Urinal system according to one of claims 13 or 14, **characterized in that** the data processing system (9) comprises at least one data processing block which is machine learning and/or comprises an artificial neural network and/or comprises an expert system.

16. Water consumer system with a urinal system (10) according to one of claims 13 to 15, **characterized in that** the water consumer system in addition to the urinal system (10) comprises at least one further water consumer at which at least one further sensor is provided, wherein the data processing system (9) is coupled to the at least one further sensor and is designed to likewise computationally evaluate the data detected by the at least one further sensor and received by the data processing system (9) and to include them in the error detection or avoidance process.

17. Water consumer system according to claim 16, **characterized in that** the water consumers and the urinal system (10) are connected to one another via a meshed and/or a wireless local data transmission network (14).

## Revendications

1. Procédé de fonctionnement d'un système d'urinoir (10) comprenant une cuvette d'urinoir (1), une entrée de liquide (2) avec une soupape d'entrée (3), une sortie d'urinoir (4), au moins un capteur de mouvement HF (5) disposé sur la cuvette d'urinoir (1) et/ou la soupape d'entrée (4), et une commande d'urinoir (8) couplée à l'au moins un capteur de mouvement HF (5) et la soupape d'entrée (3), permettant d'ouvrir la soupape d'entrée (3) pendant un temps prédéterminé lorsqu'un écoulement de liquide est détecté par l'au moins un capteur de mouvement HF (5), une pression de liquide étant détectée avec au moins un capteur de pression (12) ou un écoulement de liquide étant détecté avec au moins un capteur d'écoulement dans l'entrée de liquide (2), et la commande d'urinoir (8) comportant un système de traitement de données (9) ou étant connectée à un système de traitement de données (9) qui interroge ou reçoit au moins des données détectées par l'au moins un capteur de mouvement HF (5), les évalue par calcul et, sur la base des données évaluées, reconnaît la présence d'au moins une des erreurs suivantes et déclenche au moins une action pour éviter au moins une des erreurs suivantes :
- que la sortie d'urinoir (4) est bouchée ou
- qu'il y a une variation de pression dans un système d'eaux usées relié au système d'urinoir (10) ou
- qu'une valeur de pression minimale est inférieure ou qu'une valeur de pression maximale est dépassée dans l'entrée de liquide (2) ou
- que l'entrée de liquide (2) et/ou la soupape d'entrée (3) est défectueuse ou
- qu'il y a une défaillance d'au moins un des au moins un capteur de mouvement HF (5).

2. Procédé selon la revendication 1, **caractérisé en ce que** le système de traitement de données (9) reconnaît que la sortie d'urinoir (4) est partiellement bouchée ou que l'entrée de liquide (2) est défectueuse si, malgré l'ouverture de la soupape d'entrée (3), l'au moins un capteur de mouvement HF (5) détecte que du liquide s'écoule de la cuvette d'urinoir (1) avec un retard.

3. Procédé selon la revendication 2, **caractérisé en ce que** le système de traitement de données (9) reconnaît si la sortie d'urinoir (4) est partiellement bouchée ou si l'entrée de liquide (2) est défectueuse si, malgré l'ouverture de la soupape d'entrée (3) et la pression de liquide détectée par l'au moins un capteur de pression (12) ou l'écoulement de liquide détecté par l'au moins un capteur d'écoulement, l'au moins un capteur de mouvement HF (5) détecte que du liquide s'écoule de la cuvette d'urinoir (1) avec un retard.

4. Procédé selon l'une des revendications 1 à 3, **caractérisé en ce que** la commande d'urinoir (8) adapte le temps d'ouverture respectif de la soupape d'entrée (3) à la pression de liquide respective ou à l'écoulement de liquide respectif dans l'entrée de liquide (2).

5. Procédé selon l'une des revendications 1 à 4, **caractérisé en ce que** le système de traitement de données (9) reconnaît que l'entrée de liquide (2) est défectueuse si l'au moins un capteur de mouvement HF (5) ne détecte aucun écoulement de liquide ou un écoulement de liquide permanent ou un écoulement de liquide inférieur à une valeur seuil d'écoulement de liquide.

6. Procédé selon l'une des revendications 1 à 5, **caractérisé en ce que** le système d'urinoir (10) comporte une unité de sortie de message d'erreur et/ou de service (11) couplée au système de traitement de données (9), et le système de traitement de données (9) délivre un message de service à l'unité de sortie de message d'erreur et/ou de service (11) lorsqu'il reconnaît au moins une des erreurs.

7. Procédé selon l'une des revendications 1 à 6, **caractérisé en ce que** le système de traitement de données (9) reconnaît qu'il y a une variation de pression dans le système d'eaux usées connecté à la cuvette d'urinoir (1) si une évolution des données de l'au moins un capteur de mouvement HF (5) entraîne une série de processus de rinçage d'urinoir incorrects consécutifs en le système d'urinoir (10) ou si un modèle de signal des données de l'au moins un capteur de mouvement HF (5) correspond à une variation caractéristique du niveau de liquide dans la sortie d'urinoir (4).

8. Procédé selon l'une des revendications 1 à 7, **caractérisé en ce que** lorsque le système de traitement de données (9) reconnaît qu'il y a une variation de pression dans un système d'eaux usées connecté au système d'urinoir (10), la commande d'urinoir (8) modifie une sensibilité de l'au moins un capteur de mouvement HF (5) ou lorsqu'un modèle de signal des données de l'au moins un capteur de mouvement HF (5) correspond à une variation caractéristique du niveau de liquide dans la sortie d'urinoir (4), ne déclenche pas de processus de rinçage d'urinoir.

9. Procédé selon l'une des revendications 1 à 8, **caractérisé en ce que** le système de traitement de données (9) comporte au moins un bloc de traitement de données qui apprend de manière machine et/ou fonctionne sur la base d'un réseau neuronal artificiel et/ou est un système expert.

10. Procédé selon l'une des revendications 1 à 9, **caractérisé en ce que** le système d'urinoir (10) est intégré dans un système de consommation d'eau qui, en plus du système d'urinoir (10), comporte au moins un autre consommateur d'eau en lequel est prévu au moins un autre capteur, le système de traitement de données (9) étant couplé à l'au moins un autre capteur et évaluant également les données reçues de l'au moins un autre capteur par calcul, au moins un temps de rinçage ou un blocage dans une sortie ou une variation de pression dans un système d'eaux usées ou un défaut dans un dispositif d'entrée de l'au moins un autre consommateur d'eau déterminés étant intégrés dans la reconnaissance d'au moins une des erreurs.

11. Procédé selon la revendication 10, **caractérisé en ce que** les consommateurs d'eau et le système d'urinoir (10) communiquent entre eux via un réseau de transmission de données local maillé et/ou sans fil (14).

12. Procédé selon l'une des revendications 1 à 11, **caractérisé en ce que** une défaillance d'au moins un des au moins un capteur de mouvement HF (5) se produit lorsque le système de traitement de données (9) ne reçoit aucune donnée d'au moins un des au moins un capteur de mouvement HF (5) ou que les données reçues d'au moins un des au moins un capteur de mouvement HF (5) par le système de traitement de données (9) ne peuvent pas être traitées par le système de traitement de données (9) ou qu'au moins un des au moins un capteur de mouvement HF (5) délivre au moins un signal de service.

13. Système d'urinoir (10) comprenant une cuvette d'urinoir (1), une entrée de liquide (2) avec une soupape d'entrée (3), une sortie d'urinoir (4), au moins un capteur de mouvement HF (5) disposés sur la cuvetten d'urinoir (1) et/ou la sortie d'urinoir (4), et une commande d'urinoir (8) couplée à l'au moins un capteur de mouvement HF (5) et la soupape d'entrée (3) permettant d'ouvrir la soupape d'entrée (3) pendant un temps prédéterminé lorsqu'un écoulement de liquide est détecté par l'au moins un capteur de mouvement HF (5), le système d'urinoir (10) comprenant en outre au moins un capteur de pression (12) ou au moins un capteur d'écoulement dans l'entrée de liquide (2) ou étant couplé avec au moins un capteur de pression (12) ou au moins un capteur d'écoulement dans l'entrée de liquide (2) via un réseau de transmission de données maillé (14), et la commande d'urinoir (8) comportant un système de traitement de données (9) ou étant connectée à un système de traitement de données (9) qui est conçu pour interroger ou recevoir au moins des données détectées par l'au moins un capteur de mouvement HF (5), les évaluer par calcul et, sur la base des données évaluées, reconnaître la présence d'au moins une des erreurs suivantes, et qui est conçu pour déclencher au moins une action pour éviter au moins une des erreurs suivantes :
- que la sortie d'urinoir (4) est bouchée ou
- qu'il y a une variation de pression dans un système d'eaux usées relié au système d'urinoir (10) ou
- qu'une valeur de pression minimale est inférieure ou qu'une valeur de pression maximale est dépassée dans l'entrée de liquide (2) ou
- que l'entrée de liquide (2) et/ou la soupape d'entrée (3) est défectueuse ou
- qu'il y a une défaillance d'au moins un des au moins un capteur de mouvement HF (5).

14. Système d'urinoir selon la revendication 13, **caractérisé en ce que** le système d'urinoir (10) comporte une unité de sortie de messages d'erreur et/ou de service (11) couplée au système de traitement de données (9).

15. Système d'urinoir selon l'une des revendications 13 ou 14, **caractérisé en ce que** le système de traitement de données (9) comporte au moins un bloc de traitement de données qui apprend de manière machine ou comporte un réseau neuronal artificiel ou un système expert.

16. Système de consommation d'eau avec un système d'urinoir (10) selon l'une des revendications 13 à 15, **caractérisé en ce que** le système de consommation d'eau comporte, en plus du système d'urinoir (10), au moins un autre consommateur d'eau en lequel est prévu au moins un autre capteur, le système de traitement de données (9) étant couplé à l'au moins un autre capteur et étant conçu pour évaluer également par calcul les données détectées par l'au moins un autre capteur et reçues par le système de traitement de données (9) et pour les inclure dans le processus de détection et/ou d'évitement d'erreurs.

17. Système de consommation d'eau selon la revendication 16, **caractérisé en ce que** les consommateurs d'eau et le système d'urinoir (10) sont reliés entre eux via un réseau de transmission de données local maillé et/ou sans fil (14).
